(19) Europäisches Patentamt
European Patent Office
Office européen des brevets

(11) **EP 3 644 047 B1**

(12) **EUROPÄISCHE PATENTSCHRIFT**

(45) Veröffentlichungstag und Bekanntmachung des Hinweises auf die Patenterteilung:
**17.08.2022 Patentblatt 2022/33**

(21) Anmeldenummer: **19204343.8**

(22) Anmeldetag: **21.10.2019**

(51) Internationale Patentklassifikation (IPC):
**G01N 21/64** *(2006.01)*    **G01N 21/27** *(2006.01)*
**G01N 33/533** *(2006.01)*    **G01J 3/44** *(2006.01)*

(52) Gemeinsame Patentklassifikation (CPC):
**G01N 21/274; G01N 21/6408; G01N 21/645;**
G01N 2021/6439

(54) **VERFAHREN ZUR BESTIMMUNG DER KONZENTRATION EINES FLUORESZIERENDEN UND/ODER FLUORESZENZMARKIERTEN ANALYTEN UND KALIBRIERVERFAHREN ZUR VORBEREITUNG DIESER BESTIMMUNG**

METHOD FOR DETERMINING THE CONCENTRATION OF A FLUORESCENT AND / OR FLUORESCENCE MARKED ANALYTE AND CALIBRATION METHOD FOR PREPARING SAID DETERMINATION

PROCÉDÉ DE DÉTERMINATION DE LA CONCENTRATION D'UN ANALYTE MARQUÉ FLUORESCENT ET / OU FLUORESCENT ET PROCÉDÉ D'ÉTALONNAGE PERMETTANT LA PRÉPARATION DE LADITE DÉTERMINATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.10.2018 DE 102018126183**

(43) Veröffentlichungstag der Anmeldung:
**29.04.2020 Patentblatt 2020/18**

(73) Patentinhaber: **Fraunhofer-Gesellschaft zur Förderung der angewandten Forschung e.V. 80686 München (DE)**

(72) Erfinder:
• **Dr. Greiner, Benjamin 53639 Königswinter (DE)**
• **Sparrenberg, Lorenz 53111 Bonn (DE)**
• **Berwanger, Kristian 53111 Bonn (DE)**

(74) Vertreter: **Lippert Stachow Patentanwälte Rechtsanwälte Partnerschaft mbB Postfach 30 02 08 51412 Bergisch Gladbach (DE)**

(56) Entgegenhaltungen:
**EP-A1- 1 645 881**

• **SCHWILLE P ET AL: "DUAL-COLOR FLUORESCENT CROSS-CORRELATION SPECTROSCOPY FOR MULTICOMPONENT DIFFUSIONAL ANALYSIS IN SOLUTION", BIOPHYSICAL JOURNAL, ELSEVIER, AMSTERDAM, NL, Bd. 72, Nr. 4, April 1997 (1997-04), Seiten 1878-1886, XP008008967, ISSN: 0006-3495**
• **THOMAS KIRNER ET AL: "Single molecule detection for in vitro diagnostics", SPIE - INTERNATIONAL SOCIETY FOR OPTICAL ENGINEERING. PROCEEDINGS, Bd. 6862, 7. Februar 2008 (2008-02-07), Seite 68620H, XP55676759, US ISSN: 0277-786X, DOI: 10.1117/12.763637 ISBN: 978-1-5106-3377-3**

**Beschreibung**

Die Erfindung betrifft ein Verfahren zur Bestimmung der Konzentration eines fluoreszierenden und/oder fluoreszenzmarkierten Analyten und ein Kalibrierverfahren zur Vorbereitung der Bestimmung der Konzentration eines fluoreszierenden und/oder fluoreszenzmarkierten Analyten.

Quantitative Analyse ist insbesondere für Biowissenschaften, Forensik und Umweltanalytik relevant. Anzahl oder Masse von Teilchen eines Analyten in einem Volumen und/oder in einer Masseneinheit werden dabei ermittelt. Bestimmung von DNA-Konzentration wird bspw. bei der Probenvorbereitung für das Next Generation Sequencing durchgeführt.

Verfahren zur Bestimmung der Konzentration von Analyten auf der Basis von Fluoreszenzmessungen sind bekannt. Unter den Fluoreszenzmessungen werden Verfahren verstanden, bei denen Fluoreszenz bzw. von einer Probe emittierte Photonen quantitativ erfasst werden. Fluoreszenzmessungen können zur Quantifizierung bzw. zur quantitativen Analyse von fluoreszierenden und/oder fluoreszenzmarkierten Analyten verwendet werden, wobei die Massenkonzentration und/oder molare Konzentration des Analyten quantitativ bestimmt wird.

Der Artikel von Schwille P., Meyer-Almes F.-J., Rigler R. Dual-color fluorescence cross-correlation spectroscopy for multicomponent diffusional analysis in solution (Biophysical J., 72(4): 1878-1886, 1997) beschreibt beispielsweise das Verwenden der Fluoreszenzkreuzkorrelationsspektroskopie zum gleichzeitigen Bestimmen der Konzentrationen der Reaktanten und des Reaktionsproduktes in einem chemischen Reaktionssystem.

Die Veröffentlichung von Kirner T., Ackermann J., Mathis H.P., Grener B., Tonn T., Tschachojan D., Kukoc-Zivojnov N., Giehring S. Single molecule detection for in vitro diognastics (SPIE - International society for optical engineering - Proceedings, 6862(7): 68620H1-68620H-9, 2008) beschreibt das Verwenden der Fluoreszenzkorrelationsspektroskopie in medizinischen Diagnostik, bspw. zur Detektion von Plasmaproteinen.

Fluoreszierende und fluoreszenzmarkierte Analyten weisen Fluorophore auf. Als Fluorophor wird ein Molekül oder ein Teil eines Moleküls bezeichnet, das in der Lage ist, Photonen des Anregungslichts zu absorbieren und Photonen des Fluoreszenzlichts zu emittieren. Ein Analyt kann eine Eigenfluoreszenz aufweisen, wobei das Fluorophor ein chemischer Bestandteil des Analyten ist. Ein Analyt kann mit einem Markierungsstoff, der Fluorophore umfasst, markiert werden. Manche Markierungsstoffe fluoreszieren nur in einem Zustand, in dem sie an den zu markierenden Analyten gebunden sind, andere Markierungsstoffe besitzen auch in einem ungebundenen Zustand eine Eigenfluoreszenz.

Während einer Fluoreszenzmessung wird zumindest ein Teil des Probenvolumens, das Beobachtungsvolumen, mit dem Anregungslicht einer geeigneten Wellenlänge bzw. eines geeigneten Spektralbereichs ausgeleuchtet. Die sich in dem Beobachtungsvolumen befindende Fluorophore werden durch die Absorption der Photonen des Anregungslichtes angeregt, emittieren im angeregten Zustand Photonen des Fluoreszenzlichts und kehren dadurch meist in ihren Grundzustand zurück. Die dem Beobachtungsvolumen emittierten Photonen werden durch einen Detektor detektiert.

Die Fluoreszenzintensität bzw. die Anzahl der in einem Beobachtungsvolumen detektierten Photonen pro Zeiteinheit hängt u.a. von der Anzahl der Fluorophore in dem Beobachtungsvolumen ab. Diese Anzahl ist proportional zur Massenkonzentration und/oder zur molaren Konzentration des fluoreszierenden oder fluoreszenzmarkierten Analyten, der die Fluorophore aufweist, wenn die Probe des Analyten eine gleichmäßige Verteilung der Fluorophore in der Probe aufweist.

Die auf diese Weise beobachtete Fluoreszenzintensität ist von der Anzahl der fluoreszierenden Teilchen im Beobachtungsvolumen und somit von der Konzentration der fluoreszierenden Teilchen in der Probe abhängig.

Die quantitativen fluoreszenzbasierenden Analyse-Verfahren nutzen die Abhängigkeit der Fluoreszenzintensität, die von einer Probe beobachtet wird, von der Konzentration der fluoreszierenden Teilchen in der Probe. Diese Abhängigkeit wird mithilfe eines Kalibrierverfahrens erfasst, indem Proben mit einem vordefinierten Wert der Konzentration des Analyten Fluoreszenzmessungen unterzogen werden und eine entsprechende konzentrationsabhängige Größe, insbesondere die Fluoreszenzintensität, ermittelt wird. Die Abhängigkeit der konzentrationsabhängigen Größe von der Konzentration des Analyten wird durch eine Kalibrierfunktion erfasst. Die Kalibrierfunktion wird dann bei den Konzentrationsbestimmungen für Proben mit unbekannten Analyten-Konzentrationen herangezogen. Der Wert der konzentrationsabhängigen Größe für die zu analysierende Probe wird unter vergleichbaren Bedingungen wie unter denen des Kalibrierverfahrens gemessen und die Konzentration des Analyten in der Probe anhand des Messwertes und der vorbestimmten Kalibrierfunktion berechnet.

Es ist nicht immer praktikabel und oft nicht möglich, die Kalibriermessungen speziell für den Analyten durchzuführen. Eine zu analysierende Probe kann bspw. eine Mischung mit unbekannten Anteilen verschiedener Analyten umfassen. Üblicherweise wird eine Kalibrierfunktion für nur einen Referenz-Analyten erstellt und bei der Konzentrationsbestimmung für verschiedene Proben chemisch verwandter Analyten verwendet.

Diese bekannte Vorgehensweise ist jedoch mit einer erheblichen Ungenauigkeit behaftet. Eine der Ursachen dafür ist das Phänomen des Photobleichens. Als Photobleichen wird der durch die Bestrahlung mit dem Anregungslicht verursachte Verlust der Fähigkeit zum Fluoreszieren bezeichnet, wobei die betroffenen Fluorophore im angeregten Zustand Reaktionen eingehen, die eine molekulare Veränderung der Fluorophore und deren Verlust zur Folge haben.

Durch das Photobleichen wird die Anzahl der Photonen, die während der Messdauer von einer Menge des Analyten bzw. des Referenz-Analyten in einer Probe emittiert und durch den Detektor detektiert werden, reduziert. Daher wird ein niedrigeres Fluoreszenzsignal beobachtet als dasjenige, das von der ursprünglichen Menge des Fluorophoren in dieser Probe zu erwarten wäre.

Das Ausmaß des Photobleichens hängt unter anderem von der Dauer der Bestrahlung mit dem Anregungslicht ab. Da nur ein Teil des Probenvolumens während der Messdauer bestrahlt wird, wird nur ein Teil der in der Probe enthaltenen Fluorophore gebleicht. Wenn die Teilchen des Analyten in der Probe frei diffundieren, halten sie sich für eine begrenzte Zeit in dem bestrahlten Volumen bzw. in dem Beobachtungsvolumen auf. Diese Zeit, auch Diffusionszeit genannt, ist die mittlere Zeit, die ein Teilchen des Analyten zum Durchqueren des Beobachtungsvolumens braucht. Verschiedene Analyten unterscheiden sich in ihren Diffusionseigenschaften. Langsamer diffundierende Teilchen halten sich länger in dem Beobachtungsvolumen auf; der Austausch mit den ungebleichten Teilchen ist daher langsamer. Deswegen hat das Phänomen des Photobleichens größere Auswirkung auf langsam diffundierende Teilchen als auf schneller diffundierende Teilchen. Die Minderung des beobachteten Fluoreszenzsignals ist bei langsamer diffundierenden Teilchen eines Analyten daher stärker ausgeprägt. Im Ergebnis, wird die Menge der Fluorophore, die an langsamere Teilchen gebunden sind, ein kleineres Fluoreszenzsignal bzw. einen niedrigeren Wert der konzentrationsabhängigen Größe ergeben, als die gleiche Menge der Fluorophore, die an schnellere Teilchen gebunden sind. Folglich, führt die Kalibrierung mit einem Referenz-Analyten, der sich von dem Analyten in den Diffusionseigenschaften unterscheidet, zu ungenauen Ergebnissen bei der Bestimmung der Konzentration des Analyten.

Eine der Aufgaben der vorliegenden Erfindung ist es mithin, ein Kalibrierverfahren vorzuschlagen, welches zumindest teilweise die obengenannten Probleme behebt und als Vorbereitung für eine Konzentrationsbestimmung für verschiedene Analyten dienen kann. Als eine weitere Aufgabe soll ein Verfahren zur Bestimmung der Konzentration eines fluoreszierenden und/oder fluoreszenzmarkierten Analyten vorgeschlagen werden, das die Genauigkeit der Konzentrationsbestimmung verbessern soll.

Diese Aufgaben werden durch das im Anspruch 1 vorgeschlagene Kalibrierverfahren und das in den Ansprüchen 9 bzw. 10 vorgeschlagene Verfahren zur Bestimmung der Konzentration gelöst.

Das erfindungsgemäße Kalibrierverfahren, das sich zur Vorbereitung der Bestimmung der Konzentration einer Probe $P_{sample}$ eines fluoreszierenden und/oder fluoreszenzmarkierten Analyten eignet, umfasst folgende Schritte:

- Bereitstellen einer Mehrzahl N fluoreszierender und/oder fluoreszenzmarkierter Referenz-Analyten $R_j$ (j=1, ..., N), die sich voneinander durch mit j wachsenden Werten $m_j$ eines Diffusionsmaßes M unterscheiden und Makromoleküle umfassen,

- Bereitstellen jeweils mindestens einer Kalibrierprobe, vorzugsweise mehrerer Kalibrierproben, $P_{j,v}$ (v=1,...,$n_j$) für jeden der Referenz-Analyten $R_j$, die jeweils einen vordefinierten Wert $c_{j,v}$ der Konzentration C des Referenz-Analyten $R_j$ aufweist,

- Durchführen von Fluoreszenzmessungen für die Kalibrierproben $P_{j,v}$ und Ermitteln des jeweiligen Wertes $i_{j,v}$ einer konzentrationsabhängigen Größe I aus der Fluoreszenzmessung für die jeweilige Kalibrierprobe $P_{j,v}$,

- Erfassen der Abhängigkeit der Werte i der konzentrationsabhängigen Größe I von den Werten c der entsprechenden Konzentration C in den Kalibrierproben $P_{j,v}$ durch jeweils eine Kalibrierfunktion, die durch geeignete Anpassung an die Wertepaare ($i_{j,v}$, $c_{j,v}$) für den jeweiligen Referenz-Analyten $R_j$ erhalten wird, wobei die Kalibrierfunktionen in einem vorbestimmten Bereich von c als monoton wachsende oder fallende Funktionen $F_j(c)$ mit j eindeutig zuge-ordneten Werten $a_j$ eines Steigungsparameters a, die der jeweiligen Ableitung der Funktion $F_j(c)$ bei c = 0 entsprechen, darstellbar sind;

- Ermitteln des Wertes $m_j$ für das Diffusionsmaß M für den jeweiligen Referenz-Analyten $R_j$, welcher die während der Fluoreszenzmessung stattfindende Diffusion des Referenz-Analyten $R_j$ beeinflusst und/oder charakterisiert, und

- Erfassen der Abhängigkeit der Werte des Steigungsparameters a von den Werten m des Diffusionsmaßes M durch eine Funktion E(m) = a, die durch eine geeignete Anpassung an die Wertepaare ($a_j$, $m_j$) erhalten wird.

Die nach dem Kalibrierverfahren nach Anspruch 1 erhaltene Funktion E(m) = a eignet sich zur Verwendung bei der Bestimmung der Konzentration eines fluoreszierenden und/oder fluoreszenzmarkierten Analyten in einer Probe des Analyten $P_{sample}$, wobei diese Bestimmung der Konzentration des Analyten nicht Teil des Kalibrierverfahrens per se ist. Zum Zwecke dieser an das Kalibrierverfahren anschließenden Bestimmung kann der für den Analyten eigene Wert $a_{sample}$ des Steigungsparameters anhand der Funktion E(m) = a durch den für diesen Analyten eigenen Wert $m_{sample}$ des Diffusionsmaßes M ermittelt werden. Der Wert $a_{sample}$ kann zusammen mit dem für die Probe des Analyten

$P_{sample}$ bestimmten Wert $i_{sample}$ der Konzentrationsabhängigen Größe dazu verwendet werden, die Konzentration $c_{sample}$ der Probe $P_{sample}$ auszurechnen. Insbesondere kann eine Funktion $F_{sample}(c) = i$, deren Ableitung bei $c=0$ den Wert $a_{sample}$ ergibt, durch geeignete Anpassung an die Funktionen $F_j(c) = i$ gewonnen werden, und aus der Funktion $F_{sample}(c) = i$ für den Wert $a_{sample}$ und dem aus der Fluoreszenzmessung für die Probe des Analyten $P_{sample}$ bestimmten Wert $i_{sample}$ kann die Konzentration $c_{sample}$ der Probe $P_{sample}$, insbesondere durch Bildung der Umkehrfunktion $F^{-1}_{sample}(c)$ oder durch ein geeignetes Näherungsverfahren, ermittelt werden. Näherungsverfahren sind an sich bekannt, bspw. das Newton-Verfahren oder andere iterative Verfahren, die in mehreren Annäherungsschritten passenden Wert finden, der z.B. eine vordefinierte Genauigkeit erfüllt.

Die Funktion $E(m) = a$ kann durch eine Anpassung einer Modellfunktion an die Wertepaare $(a_j, m_j)$ erhalten werden, wobei die Parameter der Modellfunktion durch die Anpassung ermittelt werden. Alternativ oder ergänzend, kann die Funktion $E(m) = a$ in Form einer Tabelle oder eines Graphen vorliegen. Die Funktion $E(m) = a$ ordnet jedem Wert m des Diffusionsmaßes M, zumindest aus einem Bereich der Werte m, einen Wert a des Steigungsparameters zu.

Referenz-Analyten sind Analyten, die zum Erstellen von Kalibrierfunktionen benutzt werden. Die Referenz-Analyten $R_j$ unterscheiden sich in ihren Diffusionseigenschaften voneinander und weisen daher unterschiedliche Werte eines Diffusionsmaßes auf.

Verschiedene Größen können als Diffusionsmaß M verwendet werden, bspw. die Diffusionszeit $\tau_D$, der Diffusionskoeffizient D, insbesondere der Translationsdiffusionskoeffizient, die mittlere Teilchengröße, der hydrodynamischer Radius etc. Die Werte für eine dieser verschiedenen Größen können auch aus den Werten einer anderen dieser Größen errechnet werden. Die Werte des Diffusionsmaßes M für verschiedene Analyten bzw. Referenz-Analyten können durch an sich bekannte Methoden der Korrelationsanalyse, der Fluoreszenzfluktuationsspektroskopie, der Fluoreszenzmikroskopie, oder Verfahren, die auf der Teilchengröße beruhen, bestimmt werden, oder auch der Fachliteratur bzw. Nachschlagewerken entnommen werden.

Das erfindungsgemäße Kalibrierverfahren geht von einer freien Diffusion des Analyten bzw. des Referenz-Analyten in der Probe aus. Insbesondere werden die Proben während der Fluoreszenzmessung nicht mechanisch gerührt.

Das erfindungsgemäße Kalibrierverfahren geht insbesondere von einer dreidimensionalen Diffusion des Analyten bzw. des Referenz-Analyten in der Probe aus.

Die Mehrzahl N der Referenz-Analyten kann insbesondere mindestens drei, vorzugsweise mindestens vier, besonders bevorzugt mindestens fünf fluoreszierende und/oder fluoreszenzmarkierte Referenz-Analyten umfassen.

Die Kalibrierprobe ist eine Probe, die einen Referenz-Analyten in einer vordefinierten Konzentration umfasst. Die Konzentration kann eine Massenkonzentration oder eine molare Konzentration sein. Die Konzentration kann als Masse des Analyten pro Probenvolumen bzw. Anzahl Teilchen des Analyten pro Volumen ausgedrückt sein. Die Konzentration kann grundsätzlich auch als Masse bzw. Anzahl Teilchen des Analyten pro Masse Probe ausgedrückt sein. Die Konzentration kann in Volumen- oder Gewichtsprozenten oder ähnlichen Einheiten ausgedrückt sein.

Für jeden Referenz-Analyten können insbesondere mindestens zwei, vorzugsweise mindestens drei, besonders bevorzugt mindestens vier Kalibrierproben bereitgestellt werden, welche verschiedene vorbestimmte bzw. vordefinierte Werte der Konzentration des jeweiligen Referenz-Analyten aufweisen.

Unter Fluoreszenzmessungen werden insbesondere fluorimetrische, bspw. spektrofluorimetrische Messungen verstanden. Fluoreszenzmessungen können mit einem Fluoreszenzmikroskop und/oder mit einem Fluorimeter durchgeführt werden, wobei ein Fluorimeter mit einem Mikroskop kombiniert werden kann. Fluoreszenzmessungen basieren auf der Erfassung der Anzahl von Photonen, die nach der Anregung der Fluorophore durch das Anregungslicht während einer Messdauer emittiert werden.

Unter Durchführen einer Messung wird allgemein ein zumindest einmaliges Durchführen verstanden; die Messung kann jedoch beliebig oft wiederholt werden, wobei ein Medianwert oder ein Mittelwert ermittelt und als Ergebnis der Messung benutzt werden kann.

Fluoreszenzmessungen können insbesondere durch ein Verfahren, das Laserlicht als Anregungslicht verwendet, durchgeführt werden.

Mit der konzentrationsabhängigen Größe aus der Fluoreszenzmessung ist eine Größe gemeint, deren Wert durch Fluoreszenzmessungen ermittelbar ist und von der Konzentration des fluoreszierenden bzw. fluoreszenzmarkierten Analyten bzw. Referenz-Analyten abhängig ist. Die konzentrationsabhängige Größe aus der Fluoreszenzmessung kann durch Analyse des zeitlichen Verlaufs eines Fluoreszenzsignals über eine Messdauer ermittelt werden. Die konzentrationsabhängige Größe kann die Fluoreszenzintensität sein, oder die Anzahl fluoreszierender Teilchen in einem Beobachtungsvolumen, oder ähnliches. Die konzentrationsabhängige Größe kann bspw. mittels Fluoreszenzkorrelationsspektroskopie (FCS) oder Photonenzahl-Histogramm (engl. Photon counting Histogramm, PCH) oder einer anderen bekannten Methode der Fluoreszenzfluktuationsspektroskopie ermittelt werden.

Der Wert der konzentrationsabhängigen Größe ist zumindest in einem Bereich der Konzentrationen des Analyten bzw. der Referenz-Analyten abhängig von der Konzentration des Analyten bzw. der Referenz-Analyten und ändert sich proportional zur Änderung der Konzentration. Bei höheren Konzentrationen, die außerhalb dieses Bereiches liegen, können jedoch Effekte auftreten, bspw. Reabsorption des emittierten Lichtes, die den experimentell bestimmten Wert der konzentrationsabhängigen Größe gegenüber einem aus der Abhängigkeit zu erwarteten Wert reduzieren.

Das Erfassen der Abhängigkeit der Werte der konzentrationsabhängigen Größe von den entsprechenden Werten der Konzentration kann insbesondere digital bzw. mit Hilfe eines Prozessors durchgeführt werden. Auch ein manuelles Erfassen dieser Abhängigkeit liegt im Rahmen der Erfindung.

Eine Kalibrierfunktion kann durch eine Anpassung einer geeigneten Modellfunktion an die Wertepaare $(i_{j,v}, c_{j,v})$ erhalten werden, wobei durch die Anpassung passende Werte der Funktionsparameter bestimmt werden. Die Anpassung kann insbesondere durch eine Regression durchgeführt werden.

Eine Kalibrierfunktion definiert die Abhängigkeit zwischen der Konzentration eines Referenz-Analyten und der konzentrationsabhängigen Größe, die durch eine Messung, insbesondere eine Fluoreszenzmessung, ermittelbar ist. Dabei werden die ermittelten Werte der konzentrationsabhängigen Größe in Zusammenhang mit der Konzentration gesetzt. Eine Kalibrierfunktion gibt jedem Wert der Konzentration einen entsprechenden Wert der konzentrationsabhängigen Größe, zumindest jedem Wert der Konzentration aus dem Bereich von der niedrigsten bis zur höchsten Konzentration des Referenz-Analyten, für die die Fluoreszenzmessungen durchgeführt wurden. Die Kalibrierfunktion kann zumindest in einem Bereich der Konzentrationen zumindest näherungsweise durch eine mathematische Funktion $F_j(c)$ beschrieben werden, die monoton wachsend oder fallend ist, insbesondere streng monoton und insbesondere eineindeutig.

Der Analyt, dessen Konzentration bestimmt werden soll, und die Referenz-Analyten können chemisch zumindest verwandte Stoffe und/oder Stoffe mit verwandter Struktur bzw. ähnlich aufgebauter Stoffen umfassen. Doppelsträngige DNA (dsDNA) kann bspw. als Referenz-Analyt für doppelsträngige DNA benutzt werden. dsDNA kann als Referenz-Analyt für dsRNA oder DNA-RNA Hybride und vice versa benutzt werden, wenn diese Polynukleotide mit einem Markierungsstoff fluoreszenzmarkiert sind, der die verschiedenen Polynukleotid-Arten gleich gut binden kann. Globuläre Proteine können als Referenz-Analyten für globuläre Proteine benutzt werden. Kunststoffteilchen können als Referenzanalyten für Kunststoffteilchen benutzt werden. Analyt und Referenz-Analyten können jeweils Moleküle verschiedener chemischer Natur bzw. mehrere Substanzklassen gleichzeitig umfassen, bspw. Polynukleotide, die mit Proteinmolekülen konjugiert sind, oder RNA Polynukleotide, die mit ssDNA Molekülen, insbesondere mit fluoreszenzmarkierten Deoxyribooligonukleotiden, gebunden sind.

Der Analyt und die Referenz-Analyten weisen möglichst die gleiche Anzahl Fluorophore pro Materialmenge auf bzw. sind mit einer möglichst gleichen Anzahl von Fluorophoren pro Materialmenge markiert. Unter Materialmenge ist eine Masse oder Anzahl von Teilchen des Analyten bzw. Referenz-Analyten gemeint. Manche fluoreszierende oder fluoreszenz-markierte Analyten bzw. Referenz-Analyten weisen die gleiche Anzahl Fluorophore pro Teilchen, bspw. ein Fluorophor pro Teilchen, auf. Manche fluoreszierende oder fluoreszenz-markierte Analyten bzw. Referenz-Analyten weisen die gleiche Anzahl Fluorophore pro Masseneinheit auf. Bspw. Polynukleotide, die mit einem interkalierenden Fluorophor-haltigen Markierungsstoff markiert sind, dessen Moleküle sich zwischen Nukleotid-Basen einschieben, unabhängig davon, um welche der Basen es sich handelt, können die gleiche Anzahl Fluorophore pro Masseneinheit aufweisen.

Der Begriff Teilchen kann umfassen, ist aber nicht beschränkt auf Moleküle, Molekülkomplexe, und/oder Molekülbruchstücke.

Der Analyt kann eine Mischung aus Teilchen verschiedener Größen sein.

Die Probe ist vorzugsweise flüssig. Die Probe kann eine Suspension sein. Die Probe kann eine Lösung sein.

Das erfindungsgemäße Kalibrierverfahren kann dazu dienen, die Richtigkeit und damit die Genauigkeit von Konzentrationsbestimmungen, bei welchen die Ergebnisse des Kalibrierverfahrens benutzt werden, zu erhöhen und systematische Fehler bei der Bestimmung der Konzentration eines Analyten zu reduzieren.

Der gleiche Wert $i_j$ für $c_j=0$ kann für alle Funktionen $F_j(c) = i$ bei der Anpassung festgelegt werden. Der Wert der konzentrationsabhängigen Größe, der dem Nullwert der Konzentration entsprechen soll, hängt insbesondere von den Eigenschaften des Messsystems ab, bspw. von den Eigenschaften des Fluorophors, des Markierungsstoffes, oder der Messapparatur.

Bei der Anpassung der Kalibrierfunktionen kann der Wert i für c = 0 bzw. der i-Achsenabschnitt der Funktionen $F_j(c) = i$ in einer durch die i-Achse und c-Achse definierten Koordinatenebene vorzugsweise für alle Funktionen $F_j(c)$ als eine gemeinsame Konstante festgelegt werden. Dieser Wert kann insbesondere einem Hintergrundwert $i_0$ der konzentrationsabhängigen Größe I bzw. dem Wert io aus Fluoreszenzmessungen für Proben mit c = 0 bzw. für Proben, die ohne Zugabe eines Referenz-Analyten hergestellt wurden, entsprechen. Vorzugsweise wird der Wert i für c = 0 jedoch als ein Mittelwert der konzentrationsabhängigen Größe I aus Fluoreszenzmessungen für Proben mit einer sehr niedrigen Konzentration des jeweiligen Referenz-Analyten erhalten und als gemeinsamer Wert der konzentrationsabhängigen Größe bei c = 0 für alle Funktionen $F_j(c) = i$ angenommen. Eine Probe hat einen sehr niedrigen Wert der Konzentration c, wenn der Wert der konzentrationsabhängigen Größe I aus der Fluoreszenzmessung für diese Probe den Hintergrundwert nicht überschreitet. Der Wert i für c = 0 kann gleich null sein, insbesondere wenn der Hintergrundwert von allen Werten i aus Fluoreszenzmessungen für verschiedene Proben $P_{j,v}$ abgezogen wird. In diesem Fall kann der Hintergrundwert insbesondere auch von allen Werten i aus Fluoreszenzmessungen für $P_{sample}$ abgezogen werden. Der Wert i für c = 0 kann als Mittelwert der Werte der konzentrationsabhängigen Größe für c = 0 aus den jeweils einzeln angepassten Funktionen $F_j(c)$ errechnet werden.

In einer Ausführungsform der Erfindung kann mindestens eine der Funktionen $F_j(c)$ als ein Polynom $F_j(c) = const._j + a_j \cdot c + b_j \cdot c^2 + ...$ darstellbar sein. Der Koeffizient des linearen Gliedes $a_j$ ist dabei der Steigungsparameter der Funktion.

Die Absolutwerte des Faktors $b_j$, d.h. des Koeffizienten des quadratischen Gliedes, und der Faktoren höherer Grade als zwei des mindestens einen Polynoms $F_j(c)$ können insbesondere klein gegen den Absolutwert $a_j$, d.h. den Absolutwert des Koeffizienten des linearen Gliedes sein. Die Faktoren $b_j$, ... höherer Grade können insbesondere höchstens 20%, bevorzugt höchstens 10% des Wertes $a_j$ betragen. Zumindest in einem Bereich der Konzentrationen kann die Funktion $F_j(c)$ in einer graphischen Darstellung in einer durch i-Achse und c-Achse definierten Koordinatenebene eine ausgeprägte Linearität aufweisen bzw. im Wesentlichen linear oder linear mit einer leichten Krümmung verlaufen. Dieser Bereich der Konzentration ist der bevorzugte Bereich für eine Bestimmung der Konzentration eines Analyten. Die Konzentration des Analyten in der Probe $P_{sample}$, dessen Konzentration zu bestimmen ist, sollte vorzugsweise in diesem Bereich liegen.

In einer Ausführungsform des Verfahrens kann mindestens ein Polynom $F_j(c)$ ein Polynom zweiten Grades sein.

In einer Ausführungsform des Verfahrens kann mindestens ein Polynom $F_j(c)$ ein Polynom ersten Grades sein.

Vorzugsweise können die Funktionen $F_j(c)$ so erstellt werden, dass sie sich lediglich in den Werten $a_j$ des Steigungsparameters unterscheiden. Die jeweilige Funktion $F_j(c)$ kann durch den jeweiligen Wert $a_j$ eineindeutig definiert sein. Zum Zwecke der an das Kalibrierverfahren anschließenden Bestimmung der Konzentration eines fluoreszierenden und/oder fluoreszenzmarkierten Analyten kann der für den Analyten eigene Wert $a_{sample}$ anstelle des Wertes $a_j$ in die Funktion $F_j(c)=i$ eingesetzt werden, um eine Funktion $F_{sample}(c)=i$ zu erhalten, die eine analytspezifische bzw. customisierte Abhängigkeit einer konzentrationsabhängigen Größe von der Konzentration beschreibt.

Insbesondere können die Funktionen $F_j(c)$ so erstellt werden, dass ausgehend von einer Funktion $F_k(c)$, ($k \in \{1,...,N\}$), deren Parameter durch eine Anpassung an die Wertepaare ($c_{k,v}$; $i_{k,v}$) bestimmt werden, die übrigen Funktionen $F_j(c)$ durch Rotation der Funktion $F_k(c) = i$ um den Punkt (i = const._k, c = 0) in der durch i und c definierten Koordinatenebene um einen Rotationswinkel $\theta_j$ erzeugt werden. Die Funktion $F_k(c)$ kann insbesondere ein Polynom mit einem Koeffizienten des linearen Gliedes $a_k$ sein, wobei die Absolutwerte der Faktoren höheren Grades klein gegen $a_k$ sein können. Vorzugsweise ist $F_k(c)$ ein Polynom zweiten Grades mit einem Wert $a_k$ des Steigungsparameters und einem Wert $b_k$ des Koeffizienten zweiten Grades.

Um eine solche Anpassung durchführen zu können, kann die Funktion

$$
\begin{aligned}
F_j(C) = &-\frac{1}{4b_k}\csc\theta_j\left(-\cos\theta_j + a_k\sin\theta_j + \sqrt{-4b_kC\sin\theta_j + \left(\cos\theta_j - a_k\sin\theta_j\right)^2}\right) \\
&\times \left(a_k\cos\theta_j + \cos\theta_j\cot\theta_j + 2\sin\theta_j\right. \\
&\left. -\cot\theta_j\sqrt{-4b_kC\sin\theta_j + \left(\cos\theta_j - a_k sin\theta_j\right)^2}\right) + const,
\end{aligned}
$$

die den Rotationswinkel $\theta$ als anzupassenden Parameter aufweist, wobei $-\arctan a_k < \theta < \pi/2 - \arctan a_k$, erstellt werden.

Diese rotierbare Funktion kann an die jeweiligen Wertepaare ($c_{j,v}$; $i_{j,v}$) angepasst werden. Der Parameter, dessen Wert durch die Rotation kontinuierlich verändert und als ein Ergebnis der Anpassung bestimmt wird, kann der Rotationswinkel $\theta$ zwischen dem Graphen der jeweiligen Funktion $F_j(c)$ und dem Graphen der $F_k(c)$ sein, wobei für $\theta=0$, $F_j(c) = F_k(c)$.

Die entsprechenden Werte $a_j$ des Steigungsparameters, der die Ableitung der Funktion $.F_j(C)$ mit $\theta = \theta_j$ bei c = 0 darstellt, können aus den Werten $\theta_j$ des Rotationswinkels $\theta$ nach der Formel

$$
a_j = \frac{\tan\theta_j + a_k}{1 - a_k\tan\theta_j}
$$

berechnet werden.

Die Anpassung der Funktionen $F_j(c)=i$ kann allgemein durch verschiedene Arten von Koordinatentransformation durchgeführt werden.

Ferner betrifft die Erfindung ein Verfahren zur Bestimmung der Konzentration einer Probe $P_{sample}$ eines fluo-

reszierenden und/oder fluoreszenzmarkierten Analyten, wobei das Verfahren ein Kalibrierverfahren nach einem der Ansprüche 1 bis 8 einschließt und folgende weitere Schritte aufweist:

- Bereitstellen einer Probe $P_{sample}$ eines fluoreszierenden und/oder fluoreszenzmarkierten Analyten, deren Wert $c_{sample}$ für die Konzentration C zu bestimmen ist, wobei der Analyt Makromoleküle umfasst,
- Durchführen einer Fluoreszenzmessung für die Probe $P_{sample}$ und Ermitteln des Wertes $i_{sample}$ einer konzentrationsabhängigen Größe I aus der Fluoreszenzmessung,
- Ermitteln des Wertes $m_{sample}$ eines Diffusionsmaßes M, welcher die während der Fluoreszenzmessung stattfindende Diffusion des Analyten beeinflusst und/oder charakterisiert,
- Ermitteln des für den Analyten eigenen Wertes $a_{sample}$ des Steigungsparameters a anhand der Funktion E(m) = a durch den für den Analyten eigenen Wert $m_{sample}$ des Diffusionsmaßes M, Bilden einer Funktion $F_{sample}(c) = i$, deren Ableitung bei c = 0 den Wert $a_{sample}$ ergibt, durch geeignete Anpassung an die Funktionen $F_j(c) = i$, und Ermitteln der Konzentration $c_{sample}$ der Probe $P_{sample}$ aus der Funktion $F_{sample}(c) = i$ für den Wert $a_{sample}$ und dem aus der Fluoreszenzmessung für die Probe $P_{sample}$ bestimmten Wert $i_{sample}$ durch Bildung der Umkehrfunktion $F^{-1}_{sample}(c)$ = i oder durch ein geeignetes Näherungsverfahren.

Ferner betrifft die Erfindung ein Verfahren zur Bestimmung der Konzentration einer Probe $P_{sample}$ eines fluoreszierenden und/oder fluoreszenzmarkierten Analyten unter Verwendung der aus einem Kalibrierverfahren nach einem der Ansprüche 1-8 ermittelbaren Funktion E(m) = a und den Funktionen $F_j(c) = i$ für die Werte $a_j$ des Steigungsparameters a mit den folgenden Schritten:

- Bereitstellen einer Probe $P_{sample}$ eines fluoreszierenden und/oder fluoreszenzmarkierten Analyten, deren Wert $c_{sample}$ für die Konzentration C zu bestimmen ist, wobei der Analyt Makromoleküle umfasst,
- Durchführen einer Fluoreszenzmessung für die Probe $P_{sample}$ und Ermitteln des Wertes $i_{sample}$ einer konzentrationsabhängigen Größe I aus der Fluoreszenzmessung,
- Ermitteln des Wertes $m_{sample}$ eines Diffusionsmaßes M, welcher die während der Fluoreszenzmessung stattfindende Diffusion des Analyten beeinflusst und/oder charakterisiert,
- Ermitteln des für den Analyten eigenen Wertes $a_{sample}$ des Steigungsparameters a anhand der Funktion E(m) = a durch den für den Analyten eigenen Wert $m_{sample}$ des Diffusionsmaßes M, Bilden einer Funktion $F_{sample}(c) = i$, deren Ableitung bei c = 0 den Wert $a_{sample}$ ergibt, durch geeignete Anpassung an die Funktionen $F_j(c) = i$, und Ermitteln der Konzentration $c_{sample}$ der Probe $P_{sample}$ aus der Funktion $F_{sample}(c) = i$ für den Wert $a_{sample}$ und dem aus der Fluoreszenzmessung für die Probe $P_{sample}$ bestimmten Wert $i_{sample}$ durch Bildung der Umkehrfunktion $F^{-1}_{sample}(c)$ = i oder durch ein geeignetes Näherungsverfahren.

Fluoreszenzmessungen für Analyten und Referenz-Analyten werden zweckmäßigerweise unter gleichen bzw. vergleichbaren Bedingungen, insbesondere betreffend die Temperatur der Umgebung während der Messung und die Viskosität des Verdünnungsmediums, durchgeführt. Fluoreszenzmessungen für Analyten und Referenz-Analyten werden insbesondere bei etwa gleichen Einstellungen der Messapparatur, was insbesondere die Intensität und den Spektralbereich des Anregungslichtes betrifft, durchgeführt. Die Vergleichbarkeit der Bedingungen, unter denen die Fluoreszenzmessungen durchgeführt werden, kann durch Fluoreszenzmessungen für eine Probe einer Substanz mit vorbekannter Konzentration und vorbekanntem Wert eines Diffusionsmaßes regelmäßig geprüft werden. Das Beobachtungsvolumen V für die Fluoreszenzmikroskopie kann beispielsweise durch eine Messung mit einer vorbekannten Konzentration c eines fluoreszierenden Stoffes bestimmt werden.

Vorzugsweise werden die Fluoreszenzmessungen für die Proben des Analyten $P_{sample}$ durchgeführt, deren Konzentration in dem Bereich liegt, in dem auch die Konzentrationen der Kalibrierproben lagen, für die die Funktionen $F_j(c) = i$ erstellt wurden, d.h. im gleichen Kalibrierbereich. Vorzugsweise werden verschiedene vorbestimmte Verdünnungen der Probe des Analyten vorbereitet und der Bestimmung der Konzentration unterzogen, wobei die Werte der Konzentration $c_{sample}$ als Ergebnis akzeptiert werden, die aus den Fluoreszenzmessungen stammen, bei denen die Konzentration des Analyten innerhalb des Kalibrierbereichs lag.

Das Verfahren eignet sich zum Quantifizieren bzw. quantitativen Analysieren von fluoreszierenden und/oder fluoreszenzmarkierten Analyten, wobei die Konzentration des Analyten quantitativ bestimmt werden kann. Das Verfahren eignet sich insbesondere zur Reduktion von systematischen Fehlern bei der Bestimmung der Konzentration und zum Erhöhen der Richtigkeit und folglich der Genauigkeit der Konzentrationsbestimmung.

Die Funktion $F_{sample}(c) = i$ kann dadurch gebildet werden, dass der Wert $a_{sample}$ anstelle des Wertes $a_j$ in eine der Funktionen $F_j(c) = i$ eingesetzt wird. Sollten die Funktionen $F_j(c)$ weitere Parameter zusätzlich zu $a_j$ aufweisen, können deren Werte für die Funktionen $F_{sample}(c)$ aus einer der Funktionen $F_j(c)$ übernommen werden, bspw. aus der Funktion $F_j(c)$ mit dem Wert $a_j$, der dem Wert $a_{sample}$ am nächsten kommt. Die Werte der weiteren Parameter aus einer der Funktionen $F_j(c)$ können proportional ausgehend aus dem Verhältnis $a_{sample}/a_j$ angepasst werden. Die Parameter, insbesondere die Koeffizienten höheren Grades als eins eines Polynoms, die klein gegen $a_j$ sind, können insbesondere vernachlässigt werden bzw. gleich null angenommen werden. Diese und/oder weitere Approximationsmethoden können kombiniert werden, um die geeignete Anpassung der Funktion $F_{sample}(c) = i$ an die Funktionen $F_j(c) = i$ zu erhalten.

Die Werte i der konzentrationsabhängigen Größe I aus Fluoreszenzmessungen können insbesondere mit einem Fluorimeter ermittelt werden, wobei die konzentrationsabhängige Größe I die Fluoreszenzintensität sein kann.

Die Werte i der konzentrationsabhängigen Größe I aus Fluoreszenzmessungen können vorzugsweise mit einem Verfahren, das auf Fluoreszenzmikroskopie, insbesondere konfokalen Fluoreszenzmikroskopie oder Multi-Photonen-Fluoreszenzmikroskopie, beruht, ermittelt werden. Die konzentrationsabhängige Größe I kann die mittlere Fluoreszenzintensität <I>, die mittlere Teilchenzahl in einem Beobachtungsvolumen <N> oder der Kehrwert des Varianzkoeffizienten der Fluoreszenzintensität $VarK^{-1}$ sein, wobei der Varianzkoeffizient VarK als Standardabweichung der momentanen Werte der Fluoreszenzintensität I(t), die zu verschiedenen Zeitpunkten gemessen wurden, geteilt durch die mittlere Fluoreszenzintensität <I> definiert. Unter der mittleren Fluoreszenzintensität <I> wird dabei die mittlere Fluoreszenzintensität über die Messdauer verstanden, bzw. die durchschnittliche Anzahl der in dem Beobachtungsvolumen detektierten Photonen im Zeitintervall T, geteilt durch die Dauer des Zeitintervalls T, die der Messdauer entspricht (Average number of photon counts in time interval T):

$$\langle I(t) \rangle_t \;=\; \frac{1}{T} \int_1^T I(t)dt$$

Die Einheit für die Fluoreszenzintensität ist somit Counts bzw. Kilocounts pro Sekunde, $kC \cdot s^{-1}$.

Die Fluoreszenzintensität einer Probe ist von der Menge des Fluorophors im Beobachtungsvolumen und daher von der Konzentration des Fluorophors in der Probe abhängig. Die Probe ist vorzugsweise homogen, bzw. enthält eine ähnliche Anzahl der Teilchen des Analyten bzw. Referenz-Analyten in verschiedenen Subvolumina des Probenvolumens. Verschiedene Effekte, die auf den Phasengrenzen flüssig/gasförmig bzw. flüssig/fest auftreten können, können für den Zweck vernachlässigt werden.

Mehrere Wiederholungen der Fluoreszenzmessung für eine Probe können durchgeführt werden und der Medianwert oder der Mittelwert aus den Wiederholungen kann als Wert $i_{j,v}$ ermittelt werden.

Der Analyt und die Referenz-Analyten $R_j$ umfassen Makromoleküle, insbesondere Polymere, vorzugsweise Polynukleotide und/oder Oligonukleotide und/oder Proteine. Der Analyt und die Referenz-Analyten $R_j$ können Proteine, insbesondre Antikörper umfassen. Die Proteine können fluoreszenzmarkierte Antikörper umfassen oder durch fluoreszenzmarkierte Antikörper fluoreszenzmarkiert sein. Der Analyt und die Referenz-Analyten $R_j$ können Kunststoff-Teilchen, insbesondere solche, deren Größe in sub-Mikrometer-Bereich liegt, umfassen. Der Analyt und die Referenz-Analyten $R_j$ können Biomoleküle umfassen. Die Biomoleküle müssen nicht direkt aus einem Lebewesen stammen, sondern können in vitro hergestellt und/oder modifiziert sein.

Der Analyt und die Referenz-Analyten $R_j$ können insbesondere doppelsträngige Polynukleotidfragmente umfassen, wobei die jeweiligen Referenz-Analyten $R_j$ jeweils durch eine vorbestimmte mittlere Fragmentlänge bzw. Anzahl der Basenpaare in den Polynukleotidfragmenten charakterisiert sind und sich voneinander durch die mittlere Fragmentlänge unterscheiden.

Der fluoreszierende oder fluoreszenzmarkierte Analyt kann vorzugsweise die gleichen Fluorophore oder Fluorophore mit einem in etwa gleichen Spektralbereich des Anregungslichtes, durch welches das Fluorophor angeregt werden kann, und eine in etwa gleiche Quantenausbeute (engl. quantum yield) aufweisen wie auch die fluoreszierenden bzw. fluoreszenzmarkierten Referenz-Analyten. Die Quantenausbeute ist durch das Verhältnis zwischen der Anzahl der emittierten und der absorbierten Photonen bestimmt.

Der Analyt und die Referenz-Analyten können durch verschiedene Markierungsstoffe fluoreszenzmarkiert werden, bspw. durch eine kovalente und/oder nichtkovalente Bindung mit einem Markierungsstoff, insbesondere durch eine affine Bindung. Der Markierungsstoff kann ein fluoreszenzmarkierter Antikörper sein. Der Markierungsstoff kann ein Fluoreszenzfarbstoff sein. Eine Kombination verschiedener Markierungsstoffe liegt ebenfalls im Rahmen der Erfindung.

Beispiele von Fluoreszenzfarbstoffen, mit denen der Analyt und die Referenz-Analyten markiert werden können, sind Farbstoffe der Alexa Fluor Serie, Fluorescein-basierte Farbstoffe (bspw. FITC), SyBr Serie, Yoyo-Serie, RiboGreen (ThermoFisher Scientific) und Atto Serie (Atto Tec GmbH).

Der fluoreszenzmarkierte Analyt und die fluoreszenzmarkierten Referenz-Analyten können mit einem Fluoreszenzfarbstoff markiert sein, der vorzugsweise sequenzunabhängig markiert, bzw. an die polymeren Analyten bzw. Referenz-Analyten unabhängig von der konkreten Reihenfolge der Monomere in dem Polymer, bspw. der Sequenz der Basenpaare in Polynukleotiden bindet. Der Fluoreszenzfarbstoff kann DNA und RNA gleich gut binden oder eine Präferenz für eine Art Polynukleotide aufweisen oder für eine Art Polynukleotiden spezifisch sein, bspw. nur dsDNA oder nur dsRNA binden. Im letzteren Fall kann der Fluoreszenzfarbstoff zum Markieren und Quantifizieren von einer Art Polynukleotide in einer Mischprobe verwendet werden.

Die Diffusionszeit $\tau_D$, der Diffusionskoeffizient D, insbesondere der Translationsdiffusionskoeffizient, oder die mittlere Teilchengröße können als Diffusionsmaß M verwendet werden. Die mittlere Teilchengröße kann als der hydrodynamische Radius ausgedrückt sein. Die mittlere Teilchengröße kann als die Anzahl der Basenpaare in doppelsträngigen Polynukleotiden ausgedrückt sein.

Als Diffusionszeit $\tau_D$ wird die Zeit verstanden, die ein Teilchen in Durchschnitt braucht, um das Beobachtungsvolumen zu durchqueren. Daher hängt die Diffusionszeit $\tau_D$ von der Größe und Form des Beobachtungsvolumens ab.

Die Werte m des Diffusionsmaßes M für den Analyten bzw. die Referenz-Analyten können insbesondere durch Korrelationsspektroskopie bzw. Korrelationsspektroskopie-basierende Methoden ermittelt werden. Die Werte m des Diffusionsmaßes M können beispielsweise durch die dynamische Lichtstreuung ermittelt werden.

Die Werte m des Diffusionsmaßes M für den Analyten bzw. die Referenz-Analyten können durch ein fluoreszenzbasiertes Verfahren, insbesondere durch ein Verfahren, das auf Fluoreszenzmikroskopie, vorzugsweise konfokalen Fluoreszenzmikroskopie oder Multi-Photonen-Fluoreszenzmikroskopie, beruht, ermittelt werden. Zum Beispiel können die FRAP- Methode (für engl. Fluorescence Recovery after Photobleaching), die Fluoreszenz Erholung nach dem Photobleichen, und die Fluoreszenzpolarisation-Methode Informationen zu Diffusionseigenschaften liefern.

Bei einer bevorzugten Ausführungsform des Verfahrens werden die Werte m des Diffusionsmaßes M für den jeweiligen Analyten bzw. Referenz-Analyten durch Fluoreszenzkorrelationsspektroskopie (FCS) ermittelt. Dabei wird vorzugsweise die Methode der Autokorrelation verwendet. Ein Beispiel der Methode ist in Rigler R., Mets Ü., Widengren J., Kask P. Fluorescence correlation spectroscopy with high count rate and low background: analysis of translational diffusion (European Biophysics J., 22(3):169-175, 1993) beschrieben.

Die Fluoreszenzkorrelationsspektroskopie (FCS) ist ein besonders vorteilhaftes Verfahren, das bei der Fluoreszenzmessung der konzentrationsabhängigen Größe und bei der Bestimmung der Diffusionseigenschaften verwendet werden kann. Ein Beispiel von FCS ist in Magde D., Webb W. W. and Elson E. Thermodynamic fluctuations in a reacting system - measurement by fluorescence correlation spectroscopy (Phys. Rev. Lett. 29:705-708, 1972) beschrieben. Die FCS wird vorzugsweise mit einer konfokalen Mikroskopoptik oder mit einem Multiphotonenmikroskop verwendet. Auch weitere Verfahren, bei welchen nur ein sehr kleiner Teil des Probenvolumens mit dem Anregungslicht ausgeleuchtet und durch einen Detektor beobachtet wird, liegen im Rahmen der Erfindung. Die Photonen, die von den Teilchen des Analyten bzw. des Referenz-Analyten im Beobachtungsvolumen emittiert werden, können über die konfokale Mikroskopoptik auf einen Detektor abgebildet werden. Das Beobachtungsvolumen kann 1 fl oder sogar weniger umfassen.

Fluoreszenzkorrelationsspektroskopie (FCS) ist eine Messmethode, die aus Fluktuationen der Fluoreszenzintensität Informationen gewinnt. Bei dem Verfahren gemäß der FCS wird während einer Messdauer ein Fluoreszenzsignal ermittelt, das die Anzahl der Photonen, die der Detektor während der Messdauer detektiert, über die Messdauer hinweg angibt. Aus dem Fluoreszenzsignal kann somit der zeitliche Verlauf der Anzahl der im Beobachtungsvolumen detektierten Photonen abgelesen werden.

Das Fluoreszenzsignal schwankt wegen des Phänomens der brownschen Bewegung und der Diffusion der fluoreszierenden Teilchen des Analyten aus dem Rest des Probenvolumens in das Beobachtungsvolumen hinein und hinaus. Die Anzahl der fluoreszierenden Teilchen bzw. Partikel im Beobachtungsvolumen bzw. die Teilchenzahl N schwankt um einen Mittelwert <N>. Die Teilchenzahl N ist insbesondere Poisson-verteilt. Damit schwankt auch das Fluoreszenzsignal während der Messdauer um einen Mittelwert. Diese Fluktuationen der detektierten Photonenzahl bzw. Fluktuationen der Fluoreszenzintensität I(t) bzw. der Verlauf des Fluoreszenzsignals während der Messdauer, die Zeitspur, werden in der FCS aufgenommen und ausgewertet. Dabei können die mittlere Fluoreszenzintensität <I>, die mittlere Teilchenzahl <N> und die mittlere Diffusionszeit $\tau_D$, d.h. die mittlere Aufenthaltszeit eines fluoreszierenden Teilchens im Beobachtungsvolumen, erhalten werden.

Die Fluoreszenzintensität schwankt um einen Mittelwert <I>. Diese Fluktuationen bzw. Abweichungen der momentanen Fluoreszenz I(t) vom Mittelwert <I>, sind durch die Schwankung der Anzahl der fluoreszierenden Teilchen, der Teilchenzahl N, im Beobachtungsvolumen verursacht. Die Schwankung der Anzahl der fluoreszierenden Teilchen wird wiederum zum einen durch die Diffusion der Teilchen in und aus dem Beobachtungsvolumen, und zum anderen durch den Verlust der Fluorophore durch Photobleichen-Effekte verursacht.

Um die Zeitspuren bzw. die Fluktuationen der Intensität auszuwerten und dadurch die Werte des Diffusionsmaßes zu ermitteln, kann beispielweise die Methode der Autokorrelation verwendet werden. Die Autokorrelationsfunktion $G(\tau)$ beschreibt die Selbstähnlichkeit des Fluoreszenzsignals zu verschiedenen Zeitpunkten t und t + $\tau$, wobei $\tau$ ($\tau \in$ {0, ...., Messdauer}) für die Zeitverschiebung zwischen den Zeitpunkten steht.

Die Fluktuationen $\delta I(t) = I(t)-<I(t)>$ der Fluoreszenzintensität I können über die Messdauer erfasst und zum Berechnen der Autokorrelationswerte $G(\tau)$ in Abhängigkeit von der Zeitverschiebung $\tau$ in die Formel

$$G(\tau) \; = \; \frac{\langle \delta I(t) \cdot \delta I(t + \tau) \rangle_t}{\langle I(t) \rangle_t^2}$$

eingesetzt werden. Die spitzen Klammern stehen für die Mittelung über die Messdauer.

Der Wert m des Diffusionsmaßes M für den jeweiligen Analyten bzw. Referenz-Analyten kann durch eine Anpassung einer Modellfunktion $G(\tau)$ an die durch Fluoreszenzkorrelationsspektroskopie erhaltenen Autokorrelationswerte ermittelt werden.

Die Modellfunktion kann bspw. gemäß der Formel

$$G(\tau) = \frac{1}{\langle N \rangle} \frac{1}{1 + \frac{\tau}{\tau_D}} \frac{1}{\sqrt{1 + \frac{r_0^2}{z_0^2} \frac{\tau}{\tau_D}}}$$

an die Autokorrelationswerte $G(\tau)$ angepasst werden. Die Modellfunktion beschreibt die Autokorrelationswerte $G(\tau)$ in Abhängigkeit von der Zeitverschiebung $\tau$ unter Annahme einer freien dreidimensionalen Diffusion und einer Gaußverteilung für die Intensität des Anregungslichtes, wobei die Diffusionszeit $\tau_D$ der anzupassende Parameter ist, und wobei <N> für die mittlere Teilchenzahl im Beobachtungsvolumen und $z_0$ und $r_0$ für die Radien des Beobachtungsvolumens in Richtung des Lichtstrahls des Anregungslichtes bzw. senkrecht zu dieser Richtung stehen. Die mittlere Teilchenzahl <N> kann ebenfalls durch die Anpassung bestimmt werden. Die Werte $z_0$ und $r_0$, die die Form und Größe des Beobachtungsvolumens beschreiben, können durch eine FCS Messung für eine Probe mit einer vorbekannten Konzentration einer Substanz, deren Diffusionskoeffizient bekannt ist, bestimmt werden.

Aus dem Wert $\tau_D$ kann der entsprechende Diffusionskoeffizient D als charakteristische Größe für das Diffusionsverhalten, d.h. als das Diffusionsmaß, nach der Formel $D = \frac{r_0^2}{4\tau_D}$ berechnet werden. Aus dem Wert des Diffusionskoeffizienten D kann über die Stokes-Einstein-Gleichung der hydrodynamische Radius $R_0$ berechnet werden. Somit sind alle diese Varianten des Diffusionsmaßes M durch die FCS ermittelbar.

Bei einer Ausführungsform des erfindungsgemäßen Verfahrens können die Werte m des Diffusionsmaßes M für den Analyten und/oder die Referenz-Analyten durch Verfahren, insbesondere Trennverfahren, die auf der Teilchengröße und/oder Teilchenform des Analyten bzw. des Referenz-Analyten basieren, bestimmt werden. Zu solchen Verfahren gehören bspw. Gel-Elektrophorese - ein Beispiel der Methode ist in. in J. Sambrook, T. Maniatis, D. W. Russel: Molecular cloning: a laboratory manual (3rd edition, 2001, Cold Spring Harbor Laboratory Press), beschrieben; free solution electrophoresis - ein Beispiel der Methode ist in Heller C., Slater G.W., Mayer P., Dovichi N., Pinto D., Viovy J.-L., Drouin G. Free-solution electrophoresis of DNA. (J. of Chromatography A, 806:113-121, 1988), oder in Nkodo A.E., Garnier J.M , Tinland B., Ren H., Desruisseaux C., McCormick L.C., Drouin G., Slater G.W. Diffusion coefficient of DNA molecules during free solution electrophorsis (Electrophoresis, 22:2424-2432, 2001) beschrieben, Größenausschlusschromatographie (engl. size exclusion chromatography) - ein Beispiel der Methode ist in La Verde V., Dominici P., Astegno A. Determination of Hydrodynamic Radius of Proteins by Size Exclusion Chromatography (bio-protocol, Vol.7, Iss. 8, 2017) beschrieben, Elektronenspinresonanz-Spektroskopie (ESR), oder Kernspinresonanz (NMR)-Diffusionsspektroskopie (engl. NMR diffusion spectroscopy) - ein Beispiel der Methode ist in Macchioni A., Ciancaleoni G., Zuccaccia C., Zuccaccia D. Determining accurate molecular sizes in solution through NMR diffusion spectroscopy (Chem. Soc. Rev. 37(3):479-489, 2008) beschrieben.

Für Polynukleotidfragmente als Referenz-Analyte kann die Abhängigkeit der vorbestimmten Werte $d_j$ des Diffusionskoeffizienten D einer Anzahl Referenz-Analyten $R_j$ mit unterschiedlichen mittleren Fragmentlängen $bp_j$ von den mittleren Fragmentlängen $bp_j$ durch eine Funktion f(bp) = d erfasst werden, wobei die Funktion f(bp) = d durch eine geeignete Anpassung an die Wertepaare ($d_j$, $bp_j$) erhalten wird. Mittels der Funktion f(bp) = d kann der Wert $d_{sample}$ für einen Analyten, der doppelsträngige Polynukleotidfragmente mit einer vorbekannten mittleren Fragmentlänge umfasst, bestimmbar sein. Vice versa kann die Fragmentlänge des Analyten durch den Wert d bestimmbar sein, wenn der Wert d durch eine Messung, insbesondere eine FCS Messung, ermittelt wird.

Der Wert d des Diffusionskoeffizienten kann aus der Fachliteratur erhältlich sein, sofern die Bedingungen, unter denen der Literaturwert ermittelt wurde, insbesondere was die Temperatur und Viskosität der Probe angeht, den Bedingungen ähnlich sind, unter denen die Bestimmung der Konzentration nach dem erfindungsgemäßen Verfahren durchgeführt wird.

Die Probe $P_{sample}$ und die Kalibrierproben $P_{j,v}$ können vorzugsweise eine Lösung des Analyten bzw. des Referenz-Analyten in einem Verdünnungsmedium enthalten. Alternativ oder ergänzend können die Probe $P_{sample}$ und die Kalibrierproben $P_{j,v}$ Suspensionen sein. Das Verdünnungsmedium kann Wasser umfassen und insbesondere Wasser sein. Das Verdünnungsmedium kann Stoffe umfassen, die einer Aggregation der Teilchen des Analyten in der Probe und/oder einer Adhäsion der Teilchen an der Messapparatur entgegenwirken. Das Verdünnungsmedium kann Stoffe umfassen, die einer Bildung tertiärer bzw. sekundärer Strukturen von Polynukleotiden entgegenwirken, weil diese Strukturen die Diffusionseigenschaften von Polynukleotiden, insbesondere von einsträngigen Polynukleotiden, beeinflussen können.

Die Erfindung betrifft ferner ein Kit zur Bestimmung der Konzentration von fluoreszierenden bzw. fluoreszenz-markierten Analyten unter Verwendung des Verfahrens nach einem der Ansprüche 1 bis 21, wobei das Kit eine Mehrzahl fluoreszierender und/oder fluoreszenzmarkierter und/oder fluoreszenzmarkierbarer Referenz-Analyten umfasst, die sich voneinander durch die Werte m eines Diffusionsmaßes M unterscheiden. Insbesondere kann das Kit einen Markierungsstoff zum Markieren des Analyten mit dem gleichen Markierungsstoff wie die Referenz-Analyten umfassen.

Das Verfahren nach einer der vorstehend beschriebenen Ausführungsformen kann durch ein System durchgeführt werden, umfassend ein Fluoreszenzmessgerät und eine Recheneinheit, wobei das Fluoreszenzmessgerät dazu ausgebildet ist, Fluoreszenz eines fluoreszierenden bzw. fluoreszenz-markierten Analyten in einem Beobachtungsvolumen anzuregen und aufzunehmen, um mindestens einen Wert einer konzentrationsabhängigen Größe zu erhalten, und insbesondere eine Lichtquelle umfasst, die das Licht einer Wellenlänge, die die Fluorophore des Analyten anregen kann, bereitstellen kann, und einen Detektor umfasst, der das durch die Fluorophore des Analyten emittierte Licht detektieren kann, wobei die Recheneinheit einen Prozessor aufweist und dazu programmiert ist, Ergebnisse des Verfahrens nach Anspruch 1 und/oder nach Anspruch 9 bzw. 10 zu speichern und vorzugsweise auszuwerten, insbesondere um eine Konzentration des Analyten in einer Probe zu ermitteln.

Weitere Einzelheiten und Vorteile der Erfindung werden im Folgenden, ohne Einschränkung des Schutzumfangs, durch die Beschreibung bevorzugter Ausführungsbeispiele unter Bezugnahme auf die beigefügten Zeichnungen ersichtlich. Hierbei zeigen:

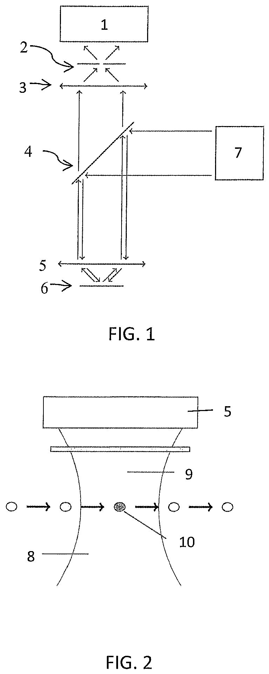

FIG. 1: des schematischen Aufbaus einer Messapparatur;

FIG. 2 Schematische Darstellung eines während der Fluoreszenzmessungen diffundierenden fluoreszierenden bzw. fluoreszenzmarkierten Teilchens;

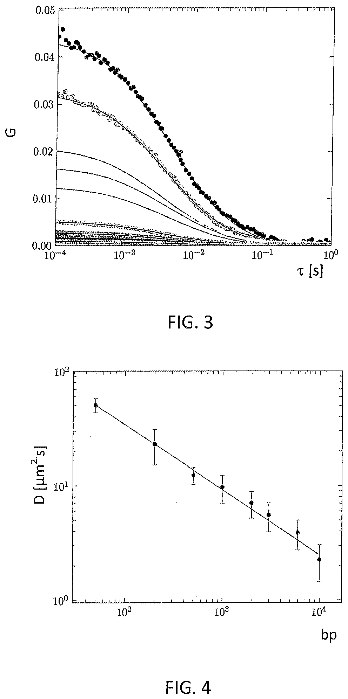

FIG. 3: Beispiel der Autokorrelationsdaten aus Fluoreszenzmessungen für markierte 50 bp DNA-Fragmente, mit der an die Daten angepassten Autokorrelationsfunktion in graphischer Darstellung;

FIG. 4: Graphische Darstellung der Abhängigkeit der Werte des Diffusionskoeffizienten D [$\mu m^2 s$] der doppelsträn-giger DNA-Fragmente mit unterschiedlichen mittleren Fragmentlängen von den mittleren Fragmentlängen [bp], ermittelt nach einem Teilaspekt des erfindungsgemäßen Verfahrens;

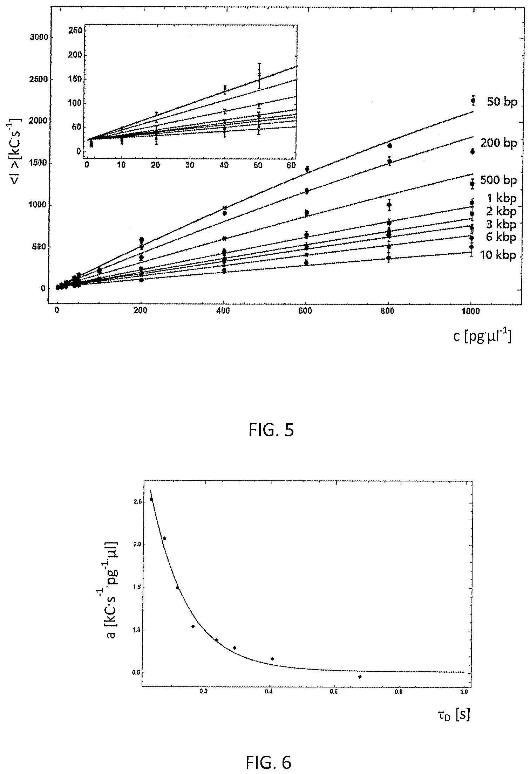

FIG. 5: Graphische Darstellung der Kalibrierfunktionen für doppelsträngige DNA-Fragmente mit unterschiedlichen mittleren Fragmentlängen (50 bp, 200 bp, 500 bp, 1 kbp, 2 kbp, 3 kbp, 6 kbp, 10 kbp) in der durch i-Achse und c-Achse definierten Koordinatenebene gemäß einer Ausführungsform der Erfindung, wobei die Kalibrierfunktionen für 200 bp, 500 bp, 1 kbp, 2 kbp, 3 kbp, 6 kbp und 10 kbp DNA-Fragmente durch Rotation der quadratischen Kalibrierfunktion für 50 bp DNA-Fragmente um den i-Achsenschnittpunkt angepasst wurden, wobei i für die mittlere Fluoreszenzintensität, [kCps], und C für die Konzentration, [pg/$\mu l$], stehen;

FIG. 6: Graphische Darstellung der Funktion $E(\tau_D) = a$ gemäß einer Ausführungsform der Erfindung, die die Abhängigkeit der Werte des Steigungsparameters a von der Diffusionszeit $\tau_D$, [s] beschreibt, wobei a, [Kilo-counts·s$^{-1}$·pg$^{-1}$·$\mu l$], hier den Steigungen der Kurventangenten der Graphen nach FIG. 5 bei c = 0 bzw. Ableitungen der entsprechenden Funktionen bei c = 0 entspricht.

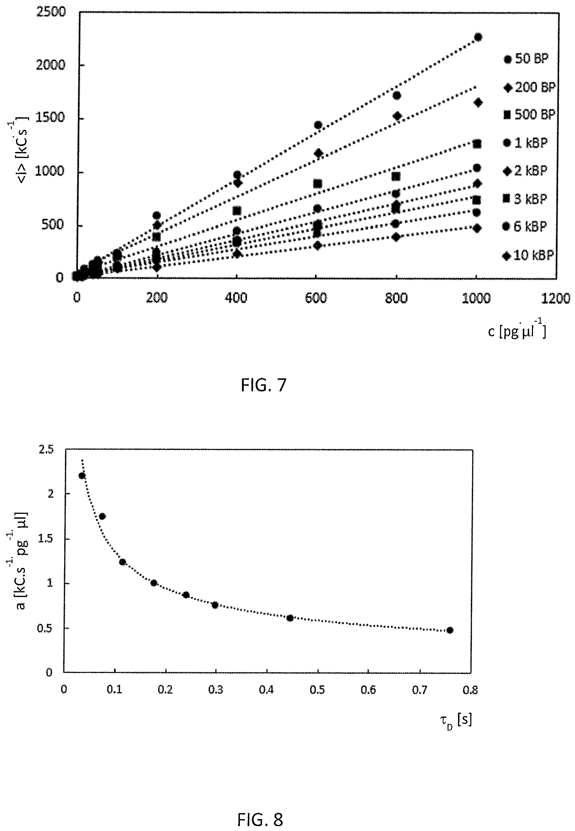

FIG. 7: Graphische Darstellung der durch eine lineare Anpassung erstellten Kalibrierfunktionen für doppelsträngige DNA-Fragmente mit unterschiedlichen mittleren Fragmentlängen (50 bp, 200 bp, 500 bp, 1 kbp, 2 kbp, 3 kbp, 6 kbp, 10 kbp) in der durch i-Achse und c-Achse definierten Koordinatenebene gemäß einer Ausführungsform der Erfindung, wobei i für die Werte der mittleren Fluoreszenzintensität, [Kilocounts·s$^{-1}$], und C für die Konzentration, [pg·$\mu l^{-1}$] stehen;

FIG. 8: Graphische Darstellung der Funktion $E(\tau_D) = a$ gemäß einer Ausführungsform der Erfindung, die die Abhängigkeit des Steigungsparameters a [Kilocounts·s$^{-1}$·pg$^{-1}$·$\mu l$] der Kalibrierfunktionen bzw. der Steigungen der Graphen nach FIG. 7 von der Diffusionszeit $\tau_D$, [s] beschreibt;

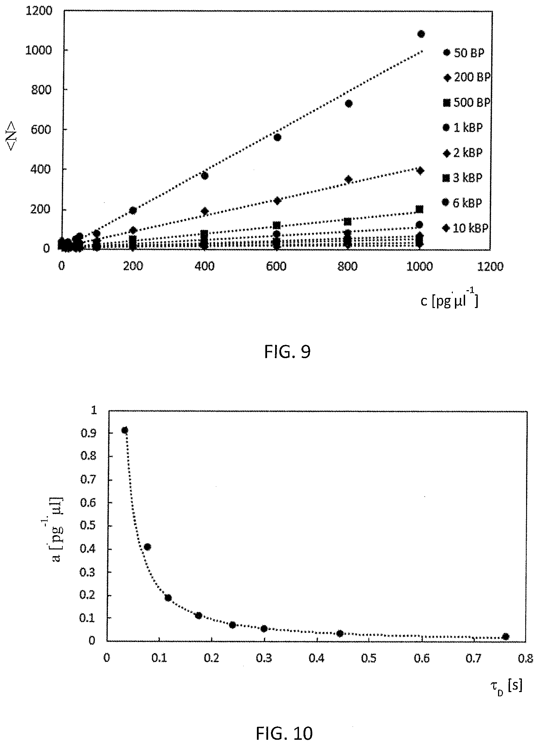

FIG. 9: Graphische Darstellung der durch eine lineare Anpassung erstellten Kalibrierfunktionen für doppelsträngige DNA-Fragmente mit unterschiedlichen mittleren Fragmentlängen (50 bp, 200 bp, 500 bp, 1 kbp, 2 kbp, 3 kbp, 6 kbp, 10 kbp) in der durch <N>-Achse und c-Achse definierten Koordinatenebene gemäß einer Ausführungsform der Erfindung, wobei <N> für die Werte der mittleren Teilchenzahl im Beobachtungsvolumen und C für die Konzentration, [pg·μl$^{-1}$], stehen;

FIG. 10: Graphische Darstellung der Funktion $E(\tau_D) = a$ gemäß einer Ausführungsform der Erfindung, die die Abhängigkeit des Steigungsparameters a [pg$^{-1}$·μl] der Kalibrierfunktionen bzw. der Steigungen der Graphen nach FIG. 9 von der Diffusionszeit $\tau_D$, [s] beschreibt;

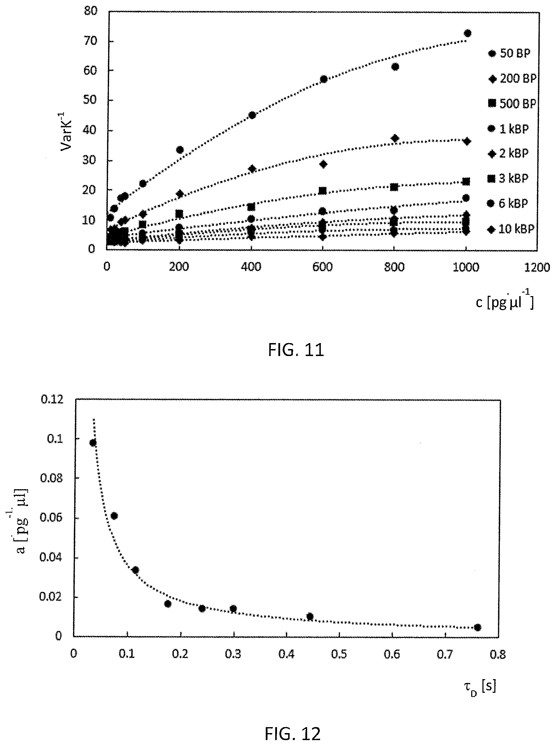

FIG. 11: Graphische Darstellung der durch eine quadratische Anpassung erstellten Kalibrierfunktionen für doppelsträngige DNA-Fragmente mit unterschiedlichen mittleren Fragmentlängen (50 bp, 200 bp, 500 bp, 1 kbp, 2 kbp, 3 kbp, 6 kbp, 10 kbp) in der durch 1/VarK-Achse und c-Achse definierten Koordinatenebene gemäß einer Ausführungsform der Erfindung, wobei 1/VarK für den Kehrwert des Varianzkoeffizienten der Fluoreszenzintensität, und C für die Konzentration, [pg/μl], stehen;

FIG. 12: Graphische Darstellung der Funktion $E(\tau_D) = a$ gemäß einer Ausführungsform der Erfindung, die die Abhängigkeit des Steigungsparameters a [pg$^{-1}$·μl] von der Diffusionszeit $\tau_D$, [s] beschreibt, wobei a hier den Steigungen der Kurventangenten der Graphen nach FIG. 11 bei c = 0 bzw. Ableitungen der entsprechenden Funktionen bei c = 0 entspricht;

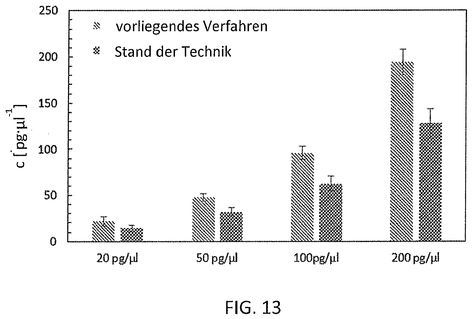

FIG. 13: Vergleich der Ergebnisse der Konzentrationsbestimmungen für Proben der Analyten, die verschiedene vorbestimmte Mischungen von doppelsträngigen DNA-Fragmenten umfassen, die jeweils nach dem Stand der Technik und nach einem Ausführungsbeispiel des erfindungsgemäßen Verfahrens nach FIG. 5, 6 durchgeführt wurden.

Acht Referenz-Analyten, die doppelsträngige DNA-Fragmente umfassen und sich voneinander durch die mittlere Fragmentlänge unterscheiden, wurden bereitgestellt. DNA-Fragmente mit den mittleren Fragmentlängen von 50 bp, 200 bp, 500 bp, 1000 bp, 2000 bp, 3000 bp, 6000 bp, und 10000 bp wurden verwendet. Die mittlere Fragmentlänge beeinflusst die Diffusionsgeschwindigkeit der DNA-Fragmente und kann als ein Diffusionsmaß betrachtet werden. Abhängig von der mittleren Fragmentlänge, sind DNA-Fragmente verschiedener Längen durch verschiedene Diffusionskoeffizienten D charakterisiert und weisen verschiedene Diffusionszeiten $\tau_D$ auf.

Jeweils eine Reihe aus elf Kalibrierproben $P_{j,v}$ die verschiedene Mengen der jeweiligen DNA-Fragmente umfassen, wurde für die DNA-Fragmente der jeweiligen Fragmentlänge vorbereitet. Die Kalibrierproben der jeweiligen Kalibrierreihe wiesen folgende DNA-Massenkonzentrationen auf: 1, 10, 20, 40, 50, 100, 200, 400, 600, 800, und 1000 pg·μl$^{-1}$. Somit wurden in diesem Beispiel die Verdünnungsreihen mit jeweils elf Proben $P_{j,v}$ für DNA-Fragmente jeder der Fragmentlängen 50 bp, 200 bp, 500 bp, 1000 bp, 2000 bp, 3000 bp, 6000 bp, und 10000 bp vorbereitet. Die Kalibrierproben $P_{j,v}$ wurden als Lösungen der DNA-Fragmente vorbereitet. Als Verdünnungsmedium wurde Wasser mit Dimethylsulfoxid (DMSO) im Verhältnis 75% Wasser, 25% DMSO verwendet. Die Proben $P_{sample}$ der Analyten, deren Konzentration bestimmt werden sollte, wurden ebenfalls als Lösungen im 75% Wasser, 25% DMSO vorbereitet. DMSO wurde zum Wasser zugegeben, um eventuelle Bildung von tertiären Strukturen vorzubeugen. Wasser ohne DMSO-Zugabe kann ebenfalls verwendet werden.

In einem Beispiel wurden die DNA-Fragmente in den Kalibrierproben mit dem Fluoreszenzfarbstoff RiboGreen® (Fa. Thermo Fisher Scientific) markiert. Dieser Fluoreszenzfarbstoff bindet doppelsträngige Polynukleotide sequenzunabhängig, bzw. unabhängig von der konkreten Nukleotidsequenz der Polynukleotide. Da ein Überschuss des Markierungsstoffs bei der Markierung von Polynukleotiden verwendet wird, werden alle Bindungsstellen entlang der gesamten Länge der DNA-Fragmente mit Fluorophoren besetzt, sodass die Anzahl der gebundenen Fluorophore proportional zur Massenkonzentration von DNA ist. Die Fluoreszenzintensität des Farbstoffs im gebundenen Zustand ist um mehrere Größenordnungen höher als im ungebundenen Zustand. Infolgedessen ist der Hintergrundwert der Fluoreszenz des Verdünnungsmediums mit dem Fluoreszenzfarbstoff und ohne Zugabe der DNA-Fragmente relativ niedrig. Im vorliegenden Beispiel wurden die Werte der konzentrationsabhängigen Größe aus den Fluoreszenzmessungen für Proben, die jeweils 1 pkg·μl$^{-1}$ DNA der Referenz-Analyten mit verschiedenen DNA-Fragmentlängen aufwiesen, gemittelt und als der Wert der konzentrationsabhängigen Größe bei der c = 0 für alle Fluoreszenzmessungen angenommen, da dieser Wert nicht über dem Hintergrundwert lag.

Die Proben $P_{sample}$, deren Konzentration bestimmt werden sollte, wurden in ähnlicher Weise mit dem Fluoreszenzfarbstoff RiboGreen® markiert.

Fluoreszenzmessungen wurden bei etwa 22°C mithilfe eines Fluoreszenzmikroskops mit konfokalen Optik und Laserlicht als Anregungslicht durgeführt, mit folgender Konfiguration:

Tabelle 1: Beispiel einer Konfiguration der Messapparatur für Fluoreszenzmessungen

| Laser | Lasos LDM F Serie, 90 mW, 486 nm |
|---|---|

(fortgesetzt)

| Filters | Linus 1% Neutralfilter, Bright Line® Fluoreszenzfilter 535/40 |
|---|---|
| dichroitischer Spiegel | Linus 500 LP |
| Objektiv | Zeiss LD Plan-Neofluoar 63x / 0.75 korr, ∞ / 0-1.5 |
| Detektor | Avalanche Photodiode von Micro Photon Devices PDM Serie 100µm, gekühlt |
| Lochblende (engl. pinhole) | Durchmesser 100µm |

FIG. 1 zeigt eine schematische Darstellung des konfokalen Aufbaus des Fluoreszenzmikroskops.

Proben mit 2 µl Probenvolumen wurden Fluoreszenzmessungen unter Bestrahlung mit ca. 100µW ins Objektiv eingekoppelter Laserleistung unterzogen.

Fluoreszenzmessungen für Analyten und Referenz-Analyten wurden unter gleichen bzw. vergleichbaren Bedingungen, insbesondere betreffend die Temperatur, die Messdauer, und die Einstellungen der Messapparatur, durchgeführt.

Der Verlauf des Fluoreszenzsignals, bzw. die Anzahl der Photonen, die zu verschiedenen Zeitpunkten während der Messdauer von den Fluorophoren im Beobachtungsvolumen emittiert und von dem Detektor detektiert wurden, wurde während der Messdauer von 30 s aufgenommen. Das Beobachtungsvolumen war ca. 1 fl. und somit ein kleiner Teil des Probenvolumens. Da die Teilchen des Analyten aus dem Rest des Probenvolumens in das Beobachtungsvolumen hinein und hinaus diffundieren, wie in FIG. 2 schematisch dargestellt ist, schwankt die Teilchenzahl in dem Beobachtungsvolumen und damit das Fluoreszenzsignal während der Messdauer um einen Mittelwert. Diese Fluktuationen der detektierten Photonenzahl bzw. Fluktuationen der Fluoreszenzintensität bzw. der Verlauf des Fluoreszenzsignals während der Messdauer, die Zeitspur, wurden aufgenommen und durch Fluoreszenzkorrelationsspektroskopie (FCS) mithilfe der ALV Korrelatorkarte (engl. correlator card) verarbeitet. Je nach Ausführungsbeispiel wurden die verarbeiteten Daten zur Ermittlung der Werte einer der konzentrationsabhängigen Größen aus der Fluoreszenzmessung, u.a. der mittleren Fluoreszenzintensität <I>, der mittleren Teilchenzahl <N> im Beobachtungsvolumen, und/oder des Kehrwertes des Varianzkoeffizienten der Fluoreszenzintensität $VarK^{-1}$ verwendet. Des Weiteren, wurde die durch die ALV Korrelatorkarte verarbeiteten Daten zur Bestimmung der Diffusionseigenschaften des Analyten in der Probe bzw. eines Diffusionsmaßes M verwendet. Mithilfe der Korrelatorkarte wurden die Autokorrelationswerte $G(\tau)$ für verschiedene Werte der Zeitverschiebung $\tau$ (engl. lag time), wobei $0 \leq \tau \leq$ Messdauer, nach der Formel

$$G(\tau) = \frac{\langle \delta I(t) \cdot \delta I(t + \tau)\rangle_t}{\langle I(t)\rangle_t^2}$$

berechnet. Diese Autokorrelationsdaten bzw. die Wertepaare $(G(\tau),\tau)$ sind beispielhaft in der FIG. 3 als Punkte in der durch G-Achse und $\tau$-Achse definierten Koordinatenebene dargestellt. Eine Modellfunktion $G(\tau)$ wurde an die Autokorrelationsdaten angepasst, um die Werte für die Funktionsparameter zu bestimmen. In einem Ausführungsbeispiel wurde die Modellfunktion nach der Formel

$$G(\tau) = \frac{1}{\langle N \rangle} \frac{1}{1 + \frac{\tau}{\tau_D}} \frac{1}{\sqrt{1 + \frac{r_0^2}{z_0^2} \frac{\tau}{\tau_D}}}$$

verwendet, die die Diffusionszeit $\tau_D$ als Parameter aufweist. Durch die Anpassung wurde die Diffusionszeit $\tau_D$ für den Analyten als das Diffusionsmaß bestimmt. Im einen Ausführungsbeispiel wurde aus dem Wert $\tau_D$ der entsprechende Diffusionskoeffizient D als charakteristische Größe für das Diffusionsverhalten bzw. als das Diffusionsmaß nach der Formel $D = \dfrac{r_0^2}{4\tau_D}$ berechnet.

Die Größe und die Form des Beobachtungsvolumens bzw. die Ausdehnungen des Beobachtungsvolumens in Richtung des Lichtstrahls des Anregungslichtes $2z_0$ und senkrecht zu dieser Richtung $2r_0$ wurden durch Fluoreszenzmessungen nach der FCS Methode für eine Probe mit einer bekannten Konzentration einer Substanz mit einem vorbekannten Diffusionskoeffizienten D ermittelt, zum Beispiel mit dem Fluoreszenzfarbstoff Alexa 488 (Fa. Thermo Fisher Scientific) mit dem aus der Literatur (z.B. aus Pertasek und Schwille, Biophysical J., 94 (4):1437-1448, 2008) vorbekan-

nten Diffusionskoeffizienten von 435 $\mu$m$^2$s$^{-1}$.

Die durch die FCS ermittelten Werte des Diffusionskoeffizienten D für DNA-Fragmente verschiedener Fragmentlängen wurden dazu verwendet, um die Abhängigkeit zwischen den verschiedenen Diffusionsmaßen, der Teilchengröße - hier der Fragmentlänge - und dem Diffusionskoeffizienten D, zu erfassen. Die Modellfunktion $D = f(bp) = k_1 \times bp^{k2}$ wurde an die Wertepaare (D, bp) angepasst und folgender Zusammenhang für DNA-Fragmente in wässrigen Lösungen bei 22°C wurde festgestellt: $D = 494,065 \times bp^{-0,567}$, wobei bp für die Fragmentlänge bzw. für die Anzahl der Basenpaare steht. FIG. 4 zeigt das Ergebnis der Anpassung in einer graphischen Darstellung. Das ermittelte Verhältnis erlaubt, die Diffusionskoeffizienten D für DNA-Fragmente zu ermitteln, deren Fragmentlängen bekannt sind bzw. durch andere Methoden bestimmt wurden, wie z.B. durch Analyse von DNA-Mischungen durch Teilchengröße-basierende Trennverfahren bzw. Analyse-Verfahren, die eine Bestimmung der Teilchengröße erlauben, wie bspw. Elektrophorese oder Größenausschlusschromatographie. Aus dem Wert D kann der Wert der Diffusionszeit $\tau_D$ nach der Formel

$$\tau_D = \frac{r_0^2}{4D}$$

errechnet werden, wenn die Form und Größe des Beobachtungsvolumens durch Fluoreszenzmessungen für eine Probe mit einer bekannten Konzentration einer Substanz mit einem vorbekannten Diffusionskoeffizienten D ermittelt wurden.

Fluoreszenzmessungen wurden für jede Probe $P_{j,v}$, $P_{sample}$ fünf Mal durchgeführt, ein Medianwert berechnet und als das Messergebnis der konzentrationsabhängigen Größe für die jeweilige Probe angenommen. Die Messergebnisse für die jeweiligen Kalibrierreihen, die Kalibrierproben mit verschiedenen Werten C der Konzentration C umfassen, sind in den FIGs. 5, 7, 9, und 11 dargestellt. Die Figuren zeigen die Fluoreszenz-Messergebnisse für die Kalibrierreihen für die DNA-Fragmente verschiedener Fragmentlängen als Punkte, wobei die Graphen der Funktionen, die an die Messergebnisse angepasst wurden und die Abhängigkeit der entsprechenden konzentrationsabhängigen Größe von Konzentration erfassen, als Linien gezeigt sind. FIG. 5 und 7 zeigen die mittlere Fluoreszenzintensität <I>, FIG. 9 die mittlere Teilchenzahl <N> im Beobachtungsvolumen, und FIG. 11 den Kehrwert des Varianzkoeffizienten der Fluoreszenzintensität VarK$^{-1}$ aus der FCS in Abhängigkeit von der Konzentration.

In einem Ausführungsbeispiel nach FIG. 5 wurden die Kalibrierfunktionen wie im Folgenden beschrieben erstellt. Zuerst wurde eine Funktion $F_{50bp}(c)$ für die 50 bp DNA Fragmente durch die Anpassung einer quadratischen Funktion bzw. eines Polynoms zweiten Grades

$$F_{50bp}(c) = const. + a_{50bp} \times c + b_{50bp} \times c^2 = i$$

an die Wertepaare der 50 bp Kalibrierreihe bzw. die Messergebnisse für die mittlere Fluoreszenzintensität <I> aus FCS erstellt und die Werte $a_{50bp} = 2,68$ und $b_{50bp} = -0,0006$ ermittelt.

Der Wert const. = 16,417 wurde in diesem Ausführungsbeispiel als Mittelwert aus Fluoreszenzmessungen für Proben mit 1 pg·$\mu$l$^{-1}$ DNA verschiedener Fragmentlängen errechnet. Der Wert $a_{50bp}$ des Steigungsparameters a ist die Ableitung der Funktion $F_{50bp}(c)$ bei c = 0. Die Funktionen $F_j(c)$ für die weiteren Kalibrierreihen wurden durch Rotation der Funktion $F_{50bp}(c)$ in der durch die i-Achse und c-Achse definierten Koordinatenebene um den i-Achsenschnittpunkt (i = const, c = 0), an die jeweiligen Wertepaare für 200 bp, 500 bp usw. DNA-Fragmente angepasst. Der Parameter, dessen Werte durch die Rotation kontinuierlich verändert wurden, und als ein Ergebnis der Anpassung bestimmt wurden, war der Rotationswinkel $\theta$ zwischen dem Graphen der jeweiligen Funktion $F_j(c)$ und dem Graphen der $F_{50bp}(c)$.

Um eine solche Anpassung durchführen zu können, wurde zuerst die Funktion

$$F_j(C) = -\frac{1}{4b_{50bp}} \csc\theta_j \left( -\cos\theta_j + a_{50bp}\sin\theta_j \right.$$

$$\left. + \sqrt{-4b_{50bp}C\sin\theta_j + \left(\cos\theta_j - a_{50bp}\sin\theta_j\right)^2} \right)$$

$$\times \left( a_{50bp}\cos\theta_j + \cos\theta_j\cot\theta_j + 2\sin\theta_j \right.$$

$$\left. - \cot\theta_j \sqrt{-4b_{50bp}C\sin\theta_j + \left(\cos\theta_j - a_{50bp}sin\theta_j\right)^2} \right) + const,$$

die den Rotationswinkel θ als anzupassenden Parameter aufweist, wobei arctan $a_k < θ < π/2$ - arctan $a_k$, aufgestellt. Der passende Wert $θ_j$ des Rotationswinkels θ wurde für jede der Kalibrierreihen durch Anpassung der Funktion $F_j(c)$ an die Wertepaare der Kalibrierreihe bestimmt. Die entsprechenden Werte des Faktors $a_j$, der die Ableitung der Funktion $F_j(C)$ mit θ = $θ_j$ bei c = 0 darstellt, wurden aus den Werten $θ_j$ des Rotationswinkels θ nach der Formel

$$a_j = \frac{\tan θ_j + a_{50bp}}{1 - a_{50bp} \tan θ_j}$$

berechnet.

Im vorliegenden Ausführungsbeispiel wurden die für die DNA-Fragmente verschiedener Fragmentlänge ermittelten Werte $a_j$ des Steigungsparameters a den Werten der Diffusionszeit $τ_D$ für die entsprechenden DNA-Fragmente zugeordnet. Die entsprechenden Wertepaare $(a_j, τ_{Dj})$ sind in FIG. 6 durch Punkte in der durch die a-Achse und $τ_D$-Achse definierten Koordinatenebene dargestellt.

Um die Abhängigkeit des Steigungsparameters a von der Diffusionszeit $τ_D$ zu erfassen, wurde ein wahrscheinlichkeitsbasierter Ansatz gewählt, wonach zunächst die mittlere Anzahl der Fluoreszenzereignisse $N_f$ als eine Funktion der Diffusionszeit $τ_D$ nach der Formel

$$N_f(τ_D) = \frac{k_f}{k_{bl}} \left(1 - e^{-k_{bl}τ_D}\right)$$

dargestellt wurde, wobei $k_f$ [s$^{-1}$] für die Fluoreszenzrate und $k_{bl}$ [s$^{-1}$] für die Bleichrate stehen. Die Relation $k_f/k_{bl}$ wurde zusammen mit dem dimensionsbehafteten Vorfaktor $k_{dim}$ [Counts·pg$^{-1}$·μl] als Koeffizient $k_{int}$ [Counts·pg$^{-1}$·μl] ausgedrückt: $k_{int} = k_{dim} · k_f/k_{bl}$. Weiter wurde der Ausdruck durch $τ_D$ geteilt, um die Anzahl an Fluoreszenzphotonen in Abhängigkeit von der Diffusionszeit $τ_D$ zu erhalten und eine Konstante hinzugefügt, da auch für große Werte der Diffusionszeit die Funktionswerte $E(τ_D)$ größer 0 sein muss. Daraus folgt die Modellfunktion

$$E(τ_D) = a = \frac{k_{int}}{τ_D} \left(1 - e^{-k_{bl}τ_D}\right) + konstante,$$

die den Steigungsparameter a als Funktion der Diffusionszeit $τ_D$ darstellt. Durch Anpassung dieser Funktion an die Wertepaare $(a_j, τ_{Dj})$ wurden folgende Parameterwerte ermittelt: $k_{int}$ = 0,176, $k_{bl}$ = 19,016, konstante = 0,257. Das Ergebnis ist in der FIG. 6 als Linie des Graphen der Funktion

$$E(τ_D) = a = \frac{0,176}{τ_D} \left(1 - e^{-19,016τ_D}\right) + 0,257$$

dargestellt.

Die Funktion $E(τ_D)$ = a erlaubt, die analytspezifischen Werte des Steigungsparameters a für Analyten mit vorbestimmten Diffusionszeiten $τ_D$ zu ermitteln, um diese Werte bei der Bestimmung der Konzentration des Analyten zu verwenden.

Ein weiteres Ausführungsbeispiel zeigt die Verwendung der Funktion $E(τ_D)$ = a bei der Bestimmung der Konzentration von verschiedenen Proben $P_{sample}$. Um das Verfahren zu verifizieren, wurden mehrere Proben der DNA-Lösungen mit vorbestimmten Mischungen von doppelsträngigen DNA-Fragmenten verschiedener Fragmentlänge hergestellt und der Konzentrationsbestimmung nach einem Ausführungsbeispiel des erfindungsgemäßen Verfahrens unterzogen. Die elf DNA-Mischungen, die als Analyten vorbereitet wurden, sind in Tabelle 2 aufgelistet. Jede der Mischungen enthielt DNA-Fragmente jeweils zweier Fragmentlängen in dem angegebenen Massenverhältnis. Verdünnungen mit vier unterschiedlichen DNA-Massenkonzentrationen wurden für jede der Mischungen vorbereitet: 20 pg/μl, 50 pg/μl, 100 pg/μl, und 200 pg/μl. Alle Konzentrationen der Analyten in den Proben $P_{sample}$ lagen innerhalb des Bereiches der Konzentrationen der Kalibrierproben, die zum Erstellen der Funktionen $F_j(C)$ verwendet wurden.

Die DNA-Fragmente in den Proben $P_{sample}$ wurden mit dem Fluoreszenzfarbstoff RiboGreen® markiert und Fluoreszenzmessungen mit dem konfokalen Fluoreszenzmikroskop wie oben beschrieben unterzogen. Durch die Fluoreszenzkorrelationsspektroskopie (FCS) wurden die Werte für die mittlere Fluoreszenzintensität $i_{sample}$ und die Diffusionszeit $τ_{Dsample}$ für jede der Proben $P_{sample}$ bestimmt. Fünf Fluoreszenzmessungen für jede Probe $P_{sample}$ wurden durchgeführt und der Medianwert als Messwert verwendet. Die den analytspezifischen Diffusionszeiten $τ_{Dsample}$ entspre-

chenden analytspezifischen Werte $a_{sample}$ wurden nach der Formel

$$a_{sample} = \frac{0{,}176}{\tau_{D_{sample}}}\left(1 - e^{-19{,}016\tau_{D}sample}\right) + 0{,}257$$

für verschiedene Proben $P_{sample}$ ermittelt.

Anhand des gemessenen Wertes $i_{sample}$ und des jeweiligen Wertes $a_{sample}$ wurde durch die Formel

$$\theta_{sample} = arctan\left(\frac{-a_{50bp} + a_{sample}}{1 + a_{50bp}a_{sample}}\right)$$

für den Wert des Rotationswinkels $\theta_{sample}$ und die Formel

$$
\begin{aligned}
c_{sample} = \frac{1}{4}\Bigg(&- \frac{2a_{50bp}\cos\theta_{sample}}{b_{50bp}} - \frac{2\sin\theta_{sample}}{b_{50bp}} \\
&+ 4\,const\,\tan\theta_{sample} \\
&- 4I_{sample}\tan\theta_{sample} - \frac{2a_{50bp}\sin\theta_{sample}\tan\theta_{sample}}{b} \\
&- \frac{2\sin\theta_{sample}\,tan^2\theta_{sample}}{b_{50bp}}\Bigg) \\
&- \frac{1}{b_{50bp}}\sqrt{2}\,\sin\theta_{sample} \\
&\times \Big\{-8b_{50bp}\,const\,\cot\theta_{sample}\,csc^5\theta_{sample} \\
&+ 8b_{50bp}I_{sample}\cot\theta_{sample}\,csc^5\theta_{sample} + csc^6\theta_{sample} + a_{50bp}{}^2csc^6\,\theta_{sample} \\
&- \cos(2\theta_{sample})\,csc^6\theta_{sample} + a_{50bp}{}^2\cos(2\theta_{sample})csc^6\,\theta_{sample} \\
&+ 2a_{50bp}\,csc^6\,\theta_{sample}\sin(2\theta_{sample})\Big\}^{1/2}\tan^2\,\theta_{sample}
\end{aligned}
$$

wobei $a_{50bp}$ = 2, 68; $b_{50bp}$ = -0,0006; const. = 16,417; die Konzentration $c_{sample}$ berechnet. Die Werte sind in der Tabelle 2 zusammengefasst.

Tabelle 2. Bestimmung der Massenkonzentration der DNA-Mischungen, die mit Konzentrationen von 20 pg/µl, 50 pg/µl, 100 pg/µl, und 200 pg/µl erstellt wurden.

| Fragmentlängen in den Mischungen, bp | Mischverhältnis | Eingesetzte DNA-Konzentrationen, pg/µl | | | |
|---|---|---|---|---|---|
| | | 20 | 50 | 100 | 200 |
| 50 und 1000 | 1:1 | 21,01 | 47,77 | 111,38 | 214,21 |
| 50 und 1000 | 1:2 | 17,47 | 51,98 | 97,57 | 176,96 |
| 50 und 1000 | 1:3 | 20,51 | 49,29 | 92,91 | 210,87 |
| 50 und 1000 | 1:4 | 19,04 | 49,70 | 93,78 | 208,29 |
| 50 und 1000 | 1:5 | 19,62 | 44,80 | 96,71 | 190,54 |
| 50 und 1000 | 1: 6 | 17,52 | 45,37 | 104,06 | 165,71 |
| 200 und 500 | 1:1 | 24,98 | 54,99 | 99,59 | 204,91 |
| 200 und 500 | 1:2 | 23,78 | 53,02 | 93,66 | 206,66 |
| 200 und 500 | 1:3 | 16,05 | 42,71 | 94,54 | 200,74 |

(fortgesetzt)

| Fragmentlängen in den Mischungen, bp | Mischverhältnis | Eingesetzte DNA-Konzentrationen, pg/$\mu$l | | | |
|---|---|---|---|---|---|
| | | 20 | 50 | 100 | 200 |
| 200 und 500 | 1:4 | 30,47 | 51,44 | 95,79 | 202,47 |
| 200 und 500 | 1:5 | 28,40 | 46,72 | 103,98 | 195,55 |
| Mittelwert, pg/$\mu$l Varianzkoeffizient, % | | 21,71 23,31 | 48,89 7, 60 | 98,54 5,76 | 197,90 7,47 |
| St. Abweichung, % | | | 8,57 | -2,22 | -1,46 -1,05 |

FIG. 13 zeigt den Vergleich der Ergebnisse der Konzentrationsbestimmungen für Proben P$_{sample}$, die jeweils nach dem Stand der Technik (vgl. bspw. Herstelleranleitung für Quant-iT™ RiboGreen™ Assay-Kit, Katalognummer R11490, von Fa. Thermo Fisher Scientific) mithilfe der Kalibrierfunktion, die für 50 bp DNA-Fragmente erstellt wurde, und nach dem oben beschriebenen Ausführungsbeispiel des erfindungsgemäßen Verfahren durchgeführt wurden. Die nach dem Ausführungsbeispiel des erfindungsgemäßen Verfahren ermittelten Werte der DNA-Konzentration weisen eine höhere Genauigkeit auf und kommen somit näherer an den erwarteten Wert der Konzentration heran als die Werte, die nach dem herkömmlichen Verfahren erhalten wurden. Das erfindungsgemäße Verfahren berücksichtigt den Einfluss der Diffusion der Analyten auf die Fluoreszenzmessungen und verbessert damit die Richtigkeit der Konzentrationsbestimmung sogar für sehr niedrige Konzentrationen wie bspw. 20 pg/$\mu$l.

In weiteren Ausführungsbeispielen nach FIG. 7 und 9 wurden die Kalibrierfunktionen jeweils durch Anpassung einer linearen Funktion bzw. eines Polynoms ersten Grades $F_j(c) = const. + a_j \times c$ an die Messergebnisse für die mittlere Fluoreszenzintensität <I> bzw. die mittlere Teilchenzahl <N> aus der FCS erstellt. Der Wert von const. aus der jeweiligen Anpassung für die verschiedenen Kalibrierreihen wurde gemittelt und der Mittelwert als gleicher Wert für alle Funktionen $F_j(c)$ angenommen. Die durch die Anpassung ermittelten Werte $a_j$ des Steigungsparameters a für die jeweilige Kalibrierreihe geben die Steigung der jeweiligen Kalibriergerade an. Die Kalibrierfunktionen nach den FIG. 7 und 9 können somit in dem gesamten dargestellten Bereich der Konzentration C, 1 bis 1000 pg/$\mu$l, als Polynome ersten Grades mit den entsprechenden Werten $a_j$ des Steigungsparameter a dargestellt werden. Verschiedene Werte $a_j$ der verschiedenen Kalibrierreihen wurden in einen Zusammenhang mit den Werten m eines Diffusionsmaßes M für die entsprechenden DNA-Fragmente durch die Funktion E(m) = a gebracht, wie z.B. in den FIG. 8 und 10 für die Diffusionszeit $\tau_D$ als das Diffusionsmaß gezeigt ist.

Die Kalibrierfunktionen gemäß FIG. 11 wurden jeweils durch Anpassung einer quadratischen Funktion bzw. eines Polynoms zweiten Grades

$$F_j(c) = const. + a_j \times c + b_j \times c^2$$

an die Messergebnisse für den VarK$^{-1}$ aus FCS erstellt. Der Wert const. aus der jeweiligen Anpassung für die verschiedenen Kalibrierreihen wurde gemittelt und der Mittelwert als gleicher Wert für alle Funktionen $F_j(c)$ angenommen. Durch die Anpassung wurden die jeweiligen Werte des Steigungsparameters $a_j$ und des Koeffizienten zweiten Grades $b_j$ bestimmt. Die Kalibrierfunktionen nach FIG.11 können somit in dem gesamten dargestellten Bereich der Konzentration C, 1 bis 1000 pg/$\mu$l, als Polynome zweiten Grades mit den Werten $a_j$ des Steigungsparameters a dargestellt werden. Verschiedene Kalibrierreihen mit verschiedenen Werten $a_j$ des Steigungsparameters a wurden in einen Zusammenhang mit den Werten m eines Diffusionsmaßes M für die entsprechenden DNA-Fragmente durch die Funktion E(m) = a gebracht, wie z.B. in FIG. 12 für die Diffusionszeit $\tau_D$ als Diffusionsmaß gezeigt ist.

**Bezugszeichenliste**

1    Detektor
2    Lochblende
3    Linse
4    Dichroitischer Spiegel
5    Objektiv
6    Objektebene
7    Laser

8      Lichtstrahl des Anregungslichtes

9      Beobachtungsvolumen

10     diffundierendes Teilchen

**Patentansprüche**

1.   Kalibrierverfahren, das sich zur Vorbereitung der Bestimmung der Konzentration einer Probe $P_{sample}$ eines fluoreszierenden und/oder fluoreszenzmarkierten Analyten, wobei der Analyt Makromoleküle umfasst, eignet, mit folgenden Schritten:

- Bereitstellen einer Mehrzahl N fluoreszierender und/oder fluoreszenzmarkierter Referenz-Analyten $R_j$ (j=1, ..., N), die sich voneinander durch mit j wachsenden Werten $m_j$ eines Diffusionsmaßes M unterscheiden und Makromoleküle umfassen,
- Bereitstellen jeweils mindestens einer Kalibrierprobe $P_{j,v}$ (v=1,...,$n_j$) für jeden der Referenz-Analyten $R_j$, die jeweils einen vordefinierten Wert $c_{j,v}$ der Konzentration C des Referenz-Analyten $R_j$ aufweist,
- Durchführen von Fluoreszenzmessungen für die Kalibrierproben $P_{j,v}$ und Ermitteln des jeweiligen Wertes $i_{j,v}$ einer konzentrationsabhängigen Größe I aus der Fluoreszenzmessung für die jeweilige Kalibrierprobe $P_{j,v}$,
- Erfassen der Abhängigkeit der Werte i der konzentrationsabhängigen Größe I von den Werten c der entsprechenden Konzentration C in den Kalibrierproben $P_{j,v}$ durch jeweils eine Kalibrierfunktion, die durch geeignete Anpassung an die Wertepaare ($i_{j,v}$, $c_{j,v}$) für den jeweiligen Referenz-Analyten $R_j$ erhalten wird,

wobei die Kalibrierfunktionen in einem vorbestimmten Bereich von c als monoton wachsende oder fallende Funktionen $F_j(c)$ mit j eindeutig zugeordneten Werten $a_j$ eines Steigungsparameters a, die der jeweiligen Ableitung der Funktion $F_j(c)$ bei c = 0 entsprechen, darstellbar sind;

- Ermitteln des Wertes $m_j$ für das Diffusionsmaß M für den jeweiligen Referenz-Analyten $R_j$, welcher die während der Fluoreszenzmessung stattfindende Diffusion des Referenz-Analyten $R_j$ beeinflusst und/oder charakterisiert,
- Erfassen der Abhängigkeit der Werte des Steigungsparameters a von den Werten m des Diffusionsmaßes M durch eine Funktion E(m) = a, die durch eine geeignete Anpassung an die Wertepaare ($a_j$, $m_j$) erhalten wird,

wobei die Funktion E(m) = a bei der Bestimmung der Konzentration eines fluoreszierenden und/oder fluoreszenzmarkierten Analyten verwendbar ist, wobei zum Zwecke dieser an das Kalibrierverfahren anschließenden Bestimmung der für den Analyten eigene Wert $a_{sample}$ anhand der Funktion E(m) = a durch den für diesen Analyten eigenen Wert $m_{sample}$ des Diffusionsmaßes M ermittelt wird und eine Funktion $F_{sample}(c) = i$, deren Ableitung bei c=0 den Wert $a_{sample}$ ergibt, durch geeignete Anpassung an die Funktionen $F_j(c) = i$ gewonnen wird, und aus der Funktion $F_{sample}(c) = i$ für den Wert $a_{sample}$ und dem aus der Fluoreszenzmessung für die Probe des Analyten $P_{sample}$ bestimmten Wert $i_{sample}$ die Konzentration $c_{sample}$ der Probe $P_{sample}$ durch Bildung der Umkehrfunktion $F^{-1}_{sample}(c)$ oder durch ein geeignetes Näherungsverfahren ermittelt wird.

2.   Kalibrierverfahren nach Anspruch 1, **dadurch gekennzeichnet, dass** der gleiche Wert $i_j$ für $c_j$=0 für alle Funktionen $F_j(c) = i$ bei der Anpassung festgelegt wird.

3.   Kalibrierverfahren nach dem Anspruch 1 oder 2, **dadurch gekennzeichnet, dass** mindestens eine der Funktionen $F_j(c)$ als ein Polynom $F_j(c) = const.j + a_j \cdot c + b_j \cdot c^{2} + ...$ darstellbar ist.

4.   Kalibrierverfahren nach Anspruch 3, **dadurch gekennzeichnet, dass** die Absolutwerte der Faktoren $b_j$, ... höherer Grade als zwei des mindestens einen Polynoms $F_j(c)$ klein gegen den Absolutwert $a_j$ sind.

5.   Kalibrierverfahren nach Anspruch 3 oder 4, **dadurch gekennzeichnet, dass** das mindestens ein Polynom $F_j(c)$ ein Polynom zweiten Grades ist.

6.   Kalibrierverfahren nach Anspruch 3 oder 4, **dadurch gekennzeichnet, dass** das mindestens ein Polynom $F_j(c)$ ein Polynom ersten Grades ist.

7.   Kalibrierverfahren nach einem der Ansprüche 1 bis 6, **dadurch gekennzeichnet, dass** die Funktionen $F_j(c)$ sich lediglich in den Werten $a_j$ unterscheiden, wobei zum Zwecke der an das Kalibrierverfahren anschließenden Bestimmung der Konzentration eines fluoreszierenden und/oder fluoreszenzmarkierten Analyten der für den Analyten

eigener Wert $a_{sample}$ anstelle des Wertes $a_j$ in die Funktion $F_j(c)=i$ eingesetzt wird.

8. Kalibrierverfahren nach Anspruch 7, **dadurch gekennzeichnet, dass**, ausgehend von einer Funktion $F_k(c)$, ($k \in \{1,...,N\}$), die übrigen Funktionen $F_j(c)$ durch Rotation der Funktion $F_k(c) = i$ um den Punkt ($i$ = const. $_k$, $c = 0$) in der durch i und c definierten Koordinatenebene erzeugbar sind.

9. Verfahren zur Bestimmung der Konzentration einer Probe $P_{sample}$ eines fluoreszierenden und/oder fluoreszenzmarkierten Analyten, wobei das Verfahren ein Kalibrierverfahren nach einem der Ansprüche 1 bis 8 einschließt und folgende weitere Schritte aufweist:

   - Bereitstellen einer Probe $P_{sample}$ eines fluoreszierenden und/oder fluoreszenzmarkierten Analyten, deren Wert $c_{sample}$ für die Konzentration C zu bestimmen ist, wobei der Analyt Makromoleküle umfasst,
   - Durchführen einer Fluoreszenzmessung für die Probe $P_{sample}$ und Ermitteln des Wertes $i_{sample}$ einer konzentrationsabhängigen Größe I aus der Fluoreszenzmessung,
   - Ermitteln des Wertes $m_{sample}$ eines Diffusionsmaßes M, welcher die während der Fluoreszenzmessung stattfindende Diffusion des Analyten beeinflusst und/oder charakterisiert,
   - Ermitteln des für den Analyten eigenen Wertes $a_{sample}$ des Steigungsparameters a anhand der Funktion E(m) = a durch den für den Analyten eigenen Wert $m_{sample}$ des Diffusionsmaßes M, Bilden einer Funktion $F_{sample}(c)$ = i, deren Ableitung bei c = 0 den Wert $a_{sample}$ ergibt, durch geeignete Anpassung an die Funktionen $F_j(c) = i$, und Ermitteln der Konzentration $c_{sample}$ der Probe $P_{sample}$ aus der Funktion $F_{sample}(c) = i$ für den Wert $a_{sample}$ und dem aus der Fluoreszenzmessung für die Probe $P_{sample}$ bestimmten Wert $i_{sample}$ durch Bildung der Umkehrfunktion $F^{-1}_{sample}(c)$ oder durch ein geeignetes Näherungsverfahren.

10. Verfahren zur Bestimmung der Konzentration einer Probe $P_{sample}$ eines fluoreszierenden und/oder fluoreszenzmarkierten Analyten unter Verwendung der aus einem Kalibrierverfahren nach einem der Ansprüche 1-8 ermittelbaren Funktion E(m) = a und den Funktionen $F_j(c) = i$ für die Werte $a_j$ des Steigungsparameters a mit den folgenden Schritten:

   - Bereitstellen einer Probe $P_{sample}$ eines fluoreszierenden und/oder fluoreszenzmarkierten Analyten, deren Wert $c_{sample}$ für die Konzentration C zu bestimmen ist, wobei der Analyt Makromoleküle umfasst,
   - Durchführen einer Fluoreszenzmessung für die Probe $P_{sample}$ und Ermitteln des Wertes $i_{sample}$ einer konzentrationsabhängigen Größe I aus der Fluoreszenzmessung,
   - Ermitteln des Wertes $m_{sample}$ eines Diffusionsmaßes M, welcher die während der Fluoreszenzmessung stattfindende Diffusion des Analyten beeinflusst und/oder charakterisiert,
   - Ermitteln des für den Analyten eigenen Wertes $a_{sample}$ des Steigungsparameters a anhand der Funktion E(m) = a durch den für den Analyten eigenen Wert $m_{sample}$ des Diffusionsmaßes M, Bilden einer Funktion $F_{sample}(c)$ = i, deren Ableitung bei c = 0 den Wert $a_{sample}$ ergibt, durch geeignete Anpassung an die Funktionen $F_j(c) = i$, und Ermitteln der Konzentration $c_{sample}$ der Probe $P_{sample}$ aus der Funktion $F_{sample}(c) = i$ für den Wert $a_{sample}$ und dem aus der Fluoreszenzmessung für die Probe $P_{sample}$ bestimmten Wert $i_{sample}$ durch Bildung der Umkehrfunktion $F^{-1}_{sample}(c)$ oder durch ein geeignetes Näherungsverfahren.

11. Verfahren nach einem der Ansprüche 1-10, **dadurch gekennzeichnet, dass** die Werte i der konzentrationsabhängigen Größe I aus Fluoreszenzmessungen mit einem Fluorimeter ermittelt werden, wobei die konzentrationsabhängige Größe I die Fluoreszenzintensität ist.

12. Verfahren nach einem der Ansprüche 1-10, **dadurch g**e**kennzeichnet**, dass die Werte i der konzentrationsabhängigen Größe I aus Fluoreszenzmessungen mit einem Verfahren, das auf Fluoreszenzmikroskopie, insbesondere konfokalen Fluoreszenzmikroskopie oder Multi-Photonen-Fluoreszenzmikroskopie, beruht, ermittelt werden, wobei die konzentrationsabhängige Größe I die mittlere Fluoreszenzintensität, die mittlere Teilchenzahl in einem Beobachtungsvolumen oder der Kehrwert des Varianzkoeffizienten der Fluoreszenzintensität ist.

13. Verfahren nach einem der vorangehenden Ansprüche, **dadurch gekennzeichnet, dass** der Analyt und die Referenz-Analyten $R_j$ Polymere umfassen, vorzugsweise Polynukleotide und/oder Oligonukleotide und/oder Proteine.

14. Verfahren nach einem der vorangehenden Ansprüche, **dadurch gekennzeichnet, dass** der Analyt und die Referenz-Analyten $R_j$ doppelsträngige Polynukleotidfragmente umfassen, wobei die jeweiligen Referenz-Analyten $R_j$ jeweils durch eine vorbestimmte mittlere Fragmentlänge bzw. Anzahl der Basenpaare in den Polynukleotidfragmenten charakterisiert sind und sich voneinander durch die mittlere Fragmentlänge unterscheiden.

**15.** Verfahren nach einem der vorangehenden Ansprüche, **dadurch gekennzeichnet, dass** der fluoreszierende und/oder fluoreszenzmarkierte Analyt und die fluoreszierenden und/oder fluoreszenzmarkierten Referenz-Analyten gleiche Fluorophore oder Fluorophore mit gleichen Quantenausbeute aufweisen.

**16.** Verfahren nach einem der vorangehenden Ansprüche, **dadurch gekennzeichnet, dass** der fluoreszenzmarkierte Analyt und die fluoreszenzmarkierten Referenz-Analyten mit einem Fluoreszenzfarbstoff markiert sind, der vorzugsweise sequenzunabhängig markiert.

**17.** Verfahren nach einem der vorangehenden Ansprüche, **dadurch gekennzeichnet, dass** als Diffusionsmaß M die Diffusionszeit $\tau_D$, der Diffusionskoeffizient D oder die mittlere Teilchengröße verwendet wird.

**18.** Verfahren nach einem der vorangehenden Ansprüche, **dadurch gekennzeichnet, dass** die Werte m des Diffusionsmaßes M für den Analyten bzw. die Referenz-Analyten durch Korrelationsspektroskopie ermittelt werden.

**19.** Verfahren nach einem der vorangehenden Ansprüche, **dadurch gekennzeichnet, dass** die Werte m des Diffusionsmaßes M für den Analyten bzw. die Referenz-Analyten durch ein fluoreszenzbasiertes Verfahren, insbesondere durch ein Verfahren, das auf Fluoreszenzmikroskopie, vorzugsweise konfokalen Fluoreszenzmikroskopie oder Multi-Photonen-Fluoreszenzmikroskopie, beruht, ermittelt werden.

**20.** Verfahren nach einem der vorangehenden Ansprüche, **dadurch gekennzeichnet, dass** die Werte m des Diffusionsmaßes M für den jeweiligen Analyten bzw. Referenz-Analyten durch Fluoreszenzkorrelationsspektroskopie (FCS), insbesondere durch Autokorrelation, ermittelt werden.

**21.** Verfahren nach einem der vorangehenden Ansprüche 1 bis 20, **dadurch gekennzeichnet, dass** die Werte m des Diffusionsmaßes M für den Analyten und/oder die Referenz-Analyten durch Verfahren, insbesondere Trennverfahren, basierend auf der Teilchengröße und/oder Teilchenform des Analyten bzw. des Referenz-Analyten bestimmt werden.

**22.** Verfahren nach einem der Ansprüche 17 bis 20, **dadurch gekennzeichnet, dass** die Abhängigkeit der Werte $d_j$ des Diffusionskoeffizienten D einer Anzahl Referenz-Analyten $R_j$ mit unterschiedlichen mittleren Fragmentlängen $bp_j$ von den mittleren Fragmentlängen bp durch eine Funktion f(bp) = d erfasst wird, die durch eine Anpassung an die Wertepaare ($d_j$, $bp_j$) erhalten wird, wobei mittels der Funktion f(bp) = d der Wert $d_{sample}$ für einen Analyten, der doppelsträngige Polynukleotidfragmente mit einer bekannten mittleren Fragmentlänge umfasst, bestimmbar ist.

**23.** Verfahren nach einem der vorangehenden Ansprüche, **dadurch gekennzeichnet, dass** die Probe $P_{sample}$ und $P_{j,v}$ eine Lösung des Analyten bzw. des Referenz-Analyten in einem Verdünnungsmedium enthalten.

**24.** Kit zur Bestimmung der Konzentration von fluoreszierenden und/oder fluoreszenzmarkierten Analyten unter Verwendung des Verfahrens nach einem der Ansprüche 1 bis 21, wobei das Kit eine Mehrzahl fluoreszierender und/oder fluoreszenzmarkierter und/oder fluoreszenzmarkierbarer Referenz-Analyten umfasst, die sich voneinander durch die Werte m eines Diffusionsmaßes M unterscheiden.

**Claims**

**1.** A calibration method suitable for preparing determination of the concentration of a fluorescent and/or fluorescence-labeled analyte of a sample $P_{sample}$, wherein the analyte comprises macromolecules, comprising the steps of:

- providing a plurality N of fluorescent and/or fluorescence-labeled reference analytes $R_j$ (j = 1,..., N) which differ from one another by values $m_j$ of a diffusion measure M increasing with j and comprise macromolecules;
- providing at least one calibration sample $P_{j,v}$ (v = 1,..., $N_j$) for each one of the reference analytes $R_j$, each having a predefined value $c_{j,v}$ of concentration C of the reference analyte $R_j$;
- performing fluorescence measurements for the calibration samples $P_{j,v}$ and determining a respective value $i_{j,v}$ of a concentration-dependent parameter I from the fluorescence measurement for the respective calibration sample $P_{j,v}$;
- establishing a dependence of the values i of the concentration-dependent parameter I on the values c of the respective concentration C in the calibration samples $P_{j,v}$ by a respective calibration function that is obtained by adequate fitting to the value pairs ($i_{j,v}$, $c_{j,v}$) for the respective reference analyte $R_j$;

wherein within a predetermined range of c, the calibration functions can be represented as monotone increasing or decreasing functions $F_j(c)$ with values $a_j$, uniquely associated to j, of a slope parameter a corresponding to a respective derivative of the function $F_j(c)$ at c = 0;

- determining the value $m_j$ of the diffusion measure M for the respective reference analyte $R_j$, which influences and/or characterizes the diffusion of the reference analyte $R_j$ occurring during the fluorescence measurement;
- establishing the dependence of the values of the slope parameter a on the values m of the diffusion measure M by a function E(m) = a that is obtained by adequate fitting to the value pairs (aj, $m_j$);

wherein the function E(m) = a can be used in the determination of the concentration of a fluorescent and/or fluorescence-labeled analyte, wherein for the purpose of this determination subsequent to the calibration method, the value $a_{sample}$ specific to the analyte is determined from the function E(m) = a using the value $m_{sample}$ of the diffusion measure M specific to said analyte, and a function $F_{sample}(C) = i$ whose derivative at c = 0 gives the value $a_{sample}$ is obtained by adequate fitting to the functions $F_j(c) = i$, and wherein the concentration $c_{sample}$ of the sample $P_{sample}$ is determined from the function $F_{sample}(C) = i$ for the value $a_{sample}$ and from the value $i_{sample}$ as determined from the fluorescence measurement for the sample $P_{sample}$ of said analyte by forming the inverse function $F^{-1}_{sample}(C)$ or by a suitable approximation technique.

2. The calibration method of claim 1, wherein the same value $i_j$ is set for $c_j = 0$ for all functions $F_j(c) = i$ in the fitting.

3. The calibration method of claim 1 or 2, wherein at least one of the functions $F_j(c)$ can be represented as a polynomial $F_j(c) = const._j + a_j \cdot c + b_j \cdot c^2 + ...$ .

4. The calibration method of claim 3, wherein the absolute values of the factors $b_j$, ... of higher degrees than two of the at least one polynomial $F_j(c)$ are small relative to the absolute value of $a_j$.

5. The calibration method of claim 3 or 4, wherein the at least one polynomial $F_j(c)$ is a second degree polynomial.

6. The calibration method of claim 3 or 4, wherein the at least one polynomial $F_j(c)$ is a first degree polynomial.

7. The calibration method as claimed in any of claims 1 to 6, wherein the functions $F_j(c)$ differ only in the values $a_j$, wherein for the purpose of determination of the concentration of a fluorescent and/or fluorescence-labeled analyte subsequent to the calibration method, the value $a_{sample}$ specific to the analyte is inserted into the function $F_j(c) = i$ instead of the value $a_j$.

8. The calibration method of claim 7, wherein starting from a function $F_k(c)$, ($k \in \{1, ..., N\}$), the other functions $F_j(c)$ can be generated by rotation of the function $F_k(c) = i$ around the point ($i = const._k$, c = 0) in the coordinate plane defined by i and c.

9. A method for determining the concentration of a sample $P_{sample}$ of a fluorescent and/or fluorescence-labeled analyte, wherein the method includes a calibration method according to any one of claims 1 through 8 and comprises the further steps of:

- providing a sample $P_{sample}$ of a fluorescent and/or fluorescence-labeled analyte for which a value $c_{sample}$ of concentration C is to be determined, wherein the analyte comprises macromolecules;
- performing a fluorescence measurement for the sample $P_{sample}$ and determining the value $i_{sample}$ of a concentration-dependent parameter I from the fluorescence measurement;
- determining the value $m_{sample}$ of a diffusion measure M which influences and/or characterizes the diffusion of the analyte occurring during the fluorescence measurement;
- determining the value $a_{sample}$ of the slope parameter a specific to the analyte on the basis of the function E(m) = a using the value $m_{sample}$ of the diffusion measure M specific to the analyte, establishing a function $F_{sample}(C) = i$ whose derivative at c = 0 gives the value $a_{sample}$ by adequate fitting to the functions $F_j(c) = i$, and determining the concentration $c_{sample}$ of the sample $P_{sample}$ from the function $F_{sample}(C) = i$ for the value $a_{sample}$ and from the value $i_{sample}$ as determined from the fluorescence measurement for the sample $P_{sample}$, by forming the inverse function $F^{-1}_{sample}(C)$ or by a suitable approximation technique.

10. A method for determining the concentration of a sample $P_{sample}$ of a fluorescent and/or fluorescence-labeled analyte using the function E(m) = a that can be determined by a calibration method according to any one of claims 1 through 8 and using the functions $F_j(c) = i$ for the values $a_j$ of slope parameter a, comprising the steps of:

- providing a sample $P_{sample}$ of a fluorescent and/or fluorescence-labeled analyte for which a value $c_{sample}$ of concentration C is to be determined, wherein the analyte comprises macromolecules;
- performing a fluorescence measurement for the sample $P_{sample}$ and determining the value $i_{sample}$ of a concentration-dependent parameter I from the fluorescence measurement;
- determining the value $m_{sample}$ of a diffusion measure M which influences and/or characterizes the diffusion of the analyte occurring during the fluorescence measurement;
- determining the value $a_{sample}$ of the slope parameter a specific to the analyte on the basis of the function $E(m) = a$ using the value $m_{sample}$ of the diffusion measure M specific to the analyte, establishing a function $F_{sample}(C) = i$ whose derivative at c = 0 gives the value $a_{sample}$ by adequate fitting to the functions $F_j(c) = i$, and determining the concentration $c_{sample}$ of the sample $P_{sample}$ from the function $F_{sample}(C) = i$ for the value $a_{sample}$ and from the value $i_{sample}$ as determined from the fluorescence measurement for the sample $P_{sample}$, by forming the inverse function $F^{-1}_{sample}(C)$ or by a suitable approximation technique.

11. The method as claimed in any of claims 1 - 10, wherein the values i of the concentration-dependent parameter I are determined from fluorescence measurements using a fluorimeter, wherein the concentration-dependent parameter I is fluorescence intensity.

12. The method as claimed in any of claims 1 - 10, wherein the values i of the concentration-dependent parameter I are determined from fluorescence measurements using a technique based on fluorescence microscopy, in particular confocal fluorescence microscopy or multi-photon fluorescence microscopy, wherein the concentration-dependent parameter I is one of mean fluorescence intensity, mean particle count in an observation volume, and reciprocal of the coefficient of fluorescence intensity variance.

13. The method as claimed in any of the preceding claims, wherein the analyte and the reference analytes $R_j$ comprise polymers, preferably polynucleotides and/or oligonucleotides and/or proteins.

14. The method as claimed in any of the preceding claims, wherein the analyte and the reference analytes $R_j$ comprise double-stranded polynucleotide fragments, wherein the respective reference analytes $R_j$ are each distinguished by a predetermined mean fragment length or number of base pairs in the polynucleotide fragments and differ from each other by said mean fragment length.

15. The method as claimed in any of the preceding claims, wherein the fluorescent and/or fluorescence-labeled analyte and the fluorescent and/or fluorescence-labeled reference analytes include the same fluorophores or fluorophores with the same quantum yield.

16. The method as claimed in any of the preceding claims, wherein the fluorescence-labeled analyte and the fluorescence-labeled reference analytes are labeled with a fluorescent dye which preferably labels in a sequence-independent manner.

17. The method as claimed in any of the preceding claims, wherein the diffusion measure M used is diffusion time $\tau_D$, diffusion coefficient D, or mean particle size.

18. The method as claimed in any of the preceding claims, wherein the values m of the diffusion measure M for the analyte or the reference analytes are determined by correlation spectroscopy.

19. The method as claimed in any of the preceding claims, wherein the values m of the diffusion measure M for the analyte or the reference analytes are determined by a fluorescence-based technique, in particular by a technique based on fluorescence microscopy, preferably confocal fluorescence microscopy or multi-photon fluorescence microscopy.

20. The method as claimed in any of the preceding claims, wherein the values m of the diffusion measure M for the respective analyte or reference analyte are determined by fluorescence correlation spectroscopy (FCS), in particular by autocorrelation.

21. The method as claimed in any of the preceding claims 1 to 20, wherein the values m of the diffusion measure M for the analyte and/or the reference analytes are determined by techniques, in particular separation techniques, based on the particle size and/or particle shape of the analyte or the reference analyte.

22. The method as claimed in any of claims 17 to 20, wherein the dependence of the values $d_j$ of the diffusion coefficient D of a number of reference analytes $R_j$ having different mean fragment lengths $bp_j$ on the mean fragment lengths bp is established by a function $f(bp) = d$ that is obtained by fitting to the value pairs $(d_j, bp_j)$, wherein the function $f(bp) = d$ can be used to determine the value $d_{sample}$ for an analyte that comprises double-stranded polynucleotide fragments with a known mean fragment length.

23. The method as claimed in any of the preceding claims, wherein the sample $P_{sample}$ and $P_{j,v}$ contain a solution of the analyte or reference analyte in a dilution medium.

24. A kit for determining the concentration of fluorescent and/or fluorescence-labeled analytes using the method as claimed in any one of claims 1 through 21, wherein the kit comprises a plurality of fluorescent and/or fluorescence-labeled reference analytes and/or reference analytes that can be fluorescence labeled, which differ from each other by values m of a diffusion measure M.


**Revendications**

1. Procédé d'étalonnage approprié pour préparer la détermination de la concentration d'un analyte fluorescent et/ou marqué par fluorescence d'un échantillon $P_{sample}$, dans lequel l'analyte comprend des macromolécules, comprenant les étapes consistant à :

   - fournir une pluralité N d'analytes de référence fluorescents et/ou marqués par fluorescence Rj (j = 1,..., N) qui diffèrent les uns des autres par des valeurs $m_j$ d'une mesure de diffusion M augmentant avec j et comprennent des macromolécules;
   - fournir au moins un échantillon d'étalonnage $P_{j,v}$ (v = 1,..., $N_j$) pour chacun des analytes de référence $R_j$, chacun ayant une valeur prédéfinie $c_{j,v}$ de concentration C de l'analyte de référence $R_j$;
   - effectuer des mesures de fluorescence pour les échantillons d'étalonnage $P_{j,v}$ et déterminer une valeur $i_{j,v}$ respective d'un paramètre I dépendant de la concentration par la mesure de fluorescence pour l'échantillon d'étalonnage $P_{j,v}$ respectif;
   - établir une dépendance des valeurs i du paramètre I dépendant de la concentration des valeurs c de la concentration respective C dans les échantillons d'étalonnage $P_{j,v}$ par une fonction d'étalonnage respective qui est obtenue par un ajustement adéquat aux paires de valeurs $(i_{j,v}, c_{j,v})$ pour l'analyte de référence respectif $R_j$;

   dans lequel, dans une plage prédéterminée de c, les fonctions d'étalonnage peuvent être représentées comme des fonctions monotones croissantes ou décroissantes $F_j(c)$ avec des valeurs $a_j$, associées uniquement à j, d'un paramètre de pente a correspondant à une dérivée respective de la fonction $F_j(c)$ à c = 0;

   - déterminer la valeur $m_j$ de la mesure de diffusion M pour l'analyte de référence $R_j$ respectif, qui influence et/ou caractérise la diffusion de l'analyte de référence $R_j$ se produisant pendant la mesure de fluorescence;
   - établir la dépendance des valeurs du paramètre de pente a des valeurs m de la mesure de diffusion M par une fonction E(m) = a qui est obtenue par un ajustement adéquat aux paires de valeurs $(a_j, m_j)$;

   dans lequel la fonction E(m) = a peut être utilisée dans la détermination de la concentration d'un analyte fluorescent et/ou marqué par fluorescence, dans lequel, aux fins de cette détermination après la méthode d'étalonnage, la valeur $a_{sample}$ spécifique à l'analyte est déterminée à partir de la fonction E(m) = a en utilisant la valeur $m_{sample}$ de la mesure de diffusion M spécifique audit analyte, et une fonction $F_{sample}(C) = i$ dont la dérivée à c = 0 donne la valeur $a_{sample}$ est obtenue par ajustement adéquat aux fonctions $F_j(c) = i$, et dans lequel la concentration $c_{sample}$ de l'échantillon $P_{sample}$ est déterminée à partir de la fonction $F_{sample}(C) = i$ pour la valeur $a_{sample}$ et à partir de la valeur $i_{sample}$ telle que déterminée à partir de la mesure de fluorescence pour l'échantillon $P_{sample}$ dudit analyte en formant la fonction inverse $F^{-1}_{sample}(C)$ ou par une technique d'approximation appropriée.

2. Procédé d'étalonnage selon la revendication 1, dans lequel la même valeur $i_j$ est fixée pour $c_j = 0$ pour toutes les fonctions $F_j(c) = i$ dans l'ajustement.

3. Procédé d'étalonnage selon la revendication 1 ou 2, dans lequel au moins une des fonctions $F_j(c)$ peut être représentée comme un polynôme $F_j(c) = const._j + a_j \cdot c + b_j \cdot c^2 + ...$ .

4. Procédé d'étalonnage selon la revendication 3, dans lequel les valeurs absolues des facteurs $b_j$, ... de degrés supérieurs à deux dudit au moins un polynôme $F_j(c)$ sont petites par rapport à la valeur absolue de $a_j$.

5. Procédé d'étalonnage selon la revendication 3 ou 4, dans lequel ledit au moins un polynôme $F_j(c)$ est un polynôme du second degré.

6. Procédé d'étalonnage selon la revendication 3 ou 4, dans lequel ledit au moins un polynôme $F_j(c)$ est un polynôme du premier degré.

7. Procédé d'étalonnage selon l'une quelconque des revendications 1 à 6, dans lequel les fonctions $F_j(c)$ ne diffèrent que par les valeurs $a_j$, dans lequel, aux fins de la détermination de la concentration d'un analyte fluorescent et/ou marqué par fluorescence après le procédé d'étalonnage, la valeur $a_{sample}$ spécifique à l'analyte est insérée dans la fonction $F_j(c) = i$ à la place de la valeur $a_j$.

8. Procédé d'étalonnage de la revendication 7, dans lequel à partir d'une fonction $F_k(c)$, ($k \in \{1, ..., N\}$), les autres fonctions $F_j(c)$ peuvent être générées par rotation de la fonction $F_k(c) = i$ autour du point ($i = const._k$, $c = 0$) dans le plan de coordonnées défini par $i$ et $c$.

9. Procédé pour déterminer la concentration d'un échantillon $P_{sample}$ d'un analyte fluorescent et/ou marqué par fluorescence, dans lequel le procédé comprend un procédé d'étalonnage selon l'une quelconque des revendications 1 à 8 et comprend les étapes supplémentaires consistant à:

- fournir un échantillon $P_{sample}$ d'un analyte fluorescent et/ou marqué par fluorescence pour lequel une valeur $c_{sample}$ de concentration C doit être déterminée, dans lequel l'analyte comprend des macromolécules;
- effectuer une mesure de fluorescence pour l'échantillon $P_{sample}$ et déterminer la valeur $i_{sample}$ d'un paramètre I dépendant de la concentration à partir de la mesure de fluorescence;
- déterminer la valeur $m_{sample}$ d'une mesure de diffusion M qui influence et/ou caractérise la diffusion de l'analyte se produisant pendant la mesure de fluorescence;
- déterminer la valeur $a_{sample}$ du paramètre de pente a spécifique à l'analyte sur la base de la fonction $E(m) = a$ en utilisant la valeur $m_{sample}$ de la mesure de diffusion M spécifique à l'analyte, établir une fonction $F_{sample}(C) = i$ dont la dérivée à $c = 0$ donne la valeur $a_{sample}$ par ajustement adéquat aux fonctions $F_j(c) = i$, et déterminer la concentration $c_{sample}$ de l'échantillon $P_{sample}$ à partir de la fonction $F_{sample}(C) = i$ pour la valeur $a_{sample}$ et à partir de la valeur $i_{sample}$ telle que déterminée par la mesure de fluorescence pour l'échantillon $P_{sample}$, en formant la fonction inverse $F^{-1}_{sample}(C)$ ou par une technique d'approximation appropriée.

10. Procédé pour déterminer la concentration d'un échantillon $P_{sample}$ d'un analyte fluorescent et/ou marqué par fluorescence en utilisant la fonction $E(m) = a$ qui peut être déterminée par un procédé d'étalonnage selon l'une quelconque des revendications 1 à 8 et en utilisant les fonctions $F_j(c) = i$ pour les valeurs $a_j$ du paramètre de pente a, comprenant les étapes consistant à:

- fournir un échantillon $P_{sample}$ d'un analyte fluorescent et/ou marqué par fluorescence pour lequel une valeur $c_{sample}$ de concentration C doit être déterminée, dans lequel l'analyte comprend des macromolécules;
- effectuer une mesure de fluorescence pour l'échantillon $P_{sample}$ et déterminer la valeur $i_{sample}$ d'un paramètre I dépendant de la concentration à partir de la mesure de fluorescence;
- déterminer la valeur $m_{sample}$ d'une mesure de diffusion M qui influence et/ou caractérise la diffusion de l'analyte se produisant pendant la mesure de fluorescence;
- déterminer la valeur $a_{sample}$ du paramètre de pente a spécifique à l'analyte sur la base de la fonction $E(m) = a$ en utilisant la valeur $m_{sample}$ de la mesure de diffusion M spécifique à l'analyte, établir une fonction $F_{sample}(C) = i$ dont la dérivée à $c = 0$ donne la valeur $a_{sample}$ par ajustement adéquat aux fonctions $F_j(c) = i$, et déterminer la concentration $c_{sample}$ de l'échantillon $P_{sample}$ à partir de la fonction $F_{sample}(C) = i$ pour la valeur $a_{sample}$ et à partir de la valeur $i_{sample}$ telle que déterminée par la mesure de fluorescence pour l'échantillon $P_{sample}$, en formant la fonction inverse $F^{-1}_{sample}(C)$ ou par une technique d'approximation appropriée.

11. Procédé selon l'une quelconque des revendications 1 à 10, dans lequel les valeurs i du paramètre I dépendant de la concentration sont déterminées à partir de mesures de fluorescence effectuées à l'aide d'un fluorimètre, le paramètre I dépendant de la concentration étant l'intensité de fluorescence.

12. Procédé selon l'une quelconque des revendications 1 à 10, dans lequel les valeurs i du paramètre I dépendant de la concentration sont déterminées à partir de mesures de fluorescence réalisées à l'aide d'une technique basée sur la microscopie à fluorescence, notamment la microscopie confocale à fluorescence ou la microscopie à fluorescence multiphotonique, dans lequel le paramètre I dépendant de la concentration est l'un parmi l'intensité moyenne de fluorescence, le nombre moyen de particules dans un volume d'observation et le réciproque du coefficient de variance de l'intensité de fluorescence.

13. Procédé selon l'une quelconque des revendications précédentes, dans lequel l'analyte et les analytes de référence $R_j$ comprennent des polymères, de préférence des polynucléotides et/ou des oligonucléotides et/ou des protéines.

14. Procédé selon l'une quelconque des revendications précédentes, dans lequel l'analyte et les analytes de référence $R_j$ comprennent des fragments de polynucléotides bicaténaires, dans lequel les analytes de référence $R_j$ respectifs se distinguent chacun par une longueur de fragment moyenne prédéterminée ou un nombre de paires de bases dans les fragments de polynucléotides et diffèrent les uns des autres par ladite longueur de fragment moyenne.

15. Procédé selon l'une quelconque des revendications précédentes, dans lequel l'analyte fluorescent et/ou marqué par fluorescence et les analytes de référence fluorescents et/ou marqués par fluorescence comprennent les mêmes fluorophores ou des fluorophores ayant le même rendement quantique.

16. Procédé selon l'une quelconque des revendications précédentes, dans lequel l'analyte marqué par fluorescence et les analytes de référence marqués par fluorescence sont marqués avec un colorant fluorescent qui se marque de préférence d'une manière indépendante de la séquence.

17. Procédé selon l'une quelconque des revendications précédentes, dans lequel la mesure de diffusion M utilisée est le temps de diffusion $\tau D$, le coefficient de diffusion D, ou la taille moyenne des particules.

18. Procédé selon l'une quelconque des revendications précédentes, dans lequel les valeurs m de la mesure de diffusion M pour l'analyte ou les analytes de référence sont déterminées par spectroscopie de corrélation.

19. Procédé selon l'une quelconque des revendications précédentes, dans lequel les valeurs m de la mesure de diffusion M pour l'analyte ou les analytes de référence sont déterminées par une technique basée sur la fluorescence, en particulier par une technique basée sur la microscopie à fluorescence, de préférence la microscopie confocale à fluorescence ou la microscopie à fluorescence multiphotonique.

20. Procédé selon l'une quelconque des revendications précédentes, dans lequel les valeurs m de la mesure de diffusion M pour l'analyte ou l'analyte de référence respectif sont déterminées par spectroscopie de corrélation de fluorescence (FCS), en particulier par autocorrélation.

21. Procédé selon l'une quelconque des revendications précédentes 1 à 20, dans lequel les valeurs m de la mesure de diffusion M pour l'analyte et/ou les analytes de référence sont déterminées par des techniques, notamment techniques de séparation, basées sur la taille des particules et/ou la forme des particules de l'analyte ou de l'analyte de référence.

22. Procédé selon l'une quelconque des revendications 17 à 20, dans lequel la dépendance des valeurs $d_j$ du coefficient de diffusion D d'un certain nombre d'analytes de référence $R_j$ ayant différentes longueurs moyennes de fragment $bp_j$ par rapport aux longueurs moyennes de fragment bp est établie par une fonction f(bp) = d qui est obtenue par ajustement aux paires de valeurs $(d_j, bp_j)$, où la fonction f(bp) = d peut être utilisée pour déterminer la valeur $d_{sample}$ pour un analyte qui comprend des fragments polynucléotidiques bicaténaires avec une longueur moyenne de fragment connue.

23. Procédé selon l'une quelconque des revendications précédentes, dans lequel les échantillons $P_{sample}$ et $P_{j,v}$ contiennent une solution de l'analyte ou de l'analyte de référence dans un milieu de dilution.

24. Kit pour déterminer la concentration d'analytes fluorescents et/ou marqués par fluorescence en utilisant la méthode selon l'une quelconque des revendications 1 à 21, dans lequel le kit comprend une pluralité d'analytes de référence fluorescents et/ou marqués par fluorescence et/ou d'analytes de référence pouvant être marqués par fluorescence, qui diffèrent les uns des autres par des valeurs m d'une mesure de diffusion M.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

EP 3 644 047 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur

- **SCHWILLE P. ; MEYER-ALMES F.-J. ; RIGLER R.** Dual-color fluorescence cross-correlation spectroscopy for multicomponent diffusional analysis in solution. *Biophysical J.,* 1997, vol. 72 (4), 1878-1886
- **KIRNER T. ; ACKERMANN J. ; MATHIS H.P. ; GRENER B. ; TONN T. ; TSCHACHOJAN D. ; KUKOC-ZIVOJNOV N. ; GIEHRING S.** Single molecule detection for in vitro diognastics. *SPIE - International society for optical engineering - Proceedings,* 2008, vol. 6862 (7), 68620H1-68620H, 9
- **RIGLER R. ; METS Ü. ; WIDENGREN J. ; KASK P.** Fluorescence correlation spectroscopy with high count rate and low background: analysis of translational diffusion. *European Biophysics J.,* 1993, vol. 22 (3), 169-175
- **MAGDE D. ; WEBB W. W. ; ELSON E.** Thermodynamic fluctuations in a reacting system - measurement by fluorescence correlation spectroscopy. *Phys. Rev. Lett.,* 1972, vol. 29, 705-708
- **J. SAMBROOK ; T. MANIATIS ; D. W. RUSSEL.** Molecular cloning: a laboratory manual. Cold Spring Harbor Laboratory Press, 2001
- Free-solution electrophoresis of DNA. **HELLER C. ; SLATER G.W. ; MAYER P. ; DOVICHI N. ; PINTO D. ; VIOVY J.-L. ; DROUIN G.** J. of Chromatography A. 1988, vol. 806, 113-121
- **NKODO A.E. ; GARNIER J.M ; TINLAND B. ; REN H. ; DESRUISSEAUX C. ; MCCORMICK L.C. ; DROUIN G. ; SLATER G.W.** Diffusion coefficient of DNA molecules during free solution electrophorsis. *Electrophoresis,* 2001, vol. 22, 2424-2432
- **LA VERDE V. ; DOMINICI P. ; ASTEGNO A.** Determination of Hydrodynamic Radius of Proteins by Size Exclusion Chromatography. *bio-protocol,* 2017, vol. 7 (8
- **MACCHIONI A. ; CIANCALEONI G. ; ZUCCACCIA C. ; ZUCCACCIA D.** Determining accurate molecular sizes in solution through NMR diffusion spectroscopy. *Chem. Soc. Rev.,* 2008, vol. 37 (3), 479-489
- **PERTASEK UND SCHWILLE.** *Biophysical J.,* 2008, vol. 94 (4), 1437-1448